# EUROPEAN PATENT APPLICATION

(11) **EP 3 985 614 A1**
(43) Date of publication of application: **20.04.2022**
(21) Application number: 20841647.9
(22) Date of filing: 26.06.2020
(51) Int. Cl.: G06T 9/40, H04N 19/597

(54) **INFORMATION PROCESSING DEVICE AND METHOD**

(30) Priority: 12.07.2019 JP 2019129875
(71) Applicant: Sony Group Corporation, Tokyo 108-0075 (JP)
(72) Inventor: KUMA, Satoru, Tokyo 108-0075 (JP); NAKAGAMI, Ohji, Tokyo 108-0075 (JP); YANO, Koji, Tokyo 108-0075 (JP); YASUDA, Hiroyuki, Tokyo 108-0075 (JP); KATO, Tsuyoshi, Tokyo 108-0075 (JP)
(74) Representative: D Young & Co LLP
(86) International application number: PCT/JP2020/025168
(87) International publication number: WO 2021/010134

(57) **Abstract**

The present disclosure relates an information processing device and method capable of inhibiting deterioration in encoding efficiency.

Attribute information of a point cloud in which 3-dimensional shaped objects are expressed as a set of points is hierarchized to generate a reference relation of the attribute information between layers, and the attribute information of a layer in the layer of the generated attribute information is sub-hierarchized to generate a reference relation of the attribute information between sub-layers. The present disclosure can be applied to, for example, an information processing device, an image processing device, an encoding device, a decoding device, an electronic device, an information processing method, a program, or the like.

## Description

### [Technical Field]

The present disclosure relates to an information processing device and method, and more particularly, to an information processing device and a method capable of inhibiting deterioration in encoding efficiency.

### [Background Art]

In the related art, for example, an encoding method for 3D data indicating a 3-dimensional structure such as a point cloud has been conceived (for example, see NPL 1). Data of a point cloud includes geometry data (also referred to as positional information) of each point and attribute data (also referred to as attribute information). Accordingly, encoding of the point cloud is performed on each of the geometry data and the attribute data. Various methods have been proposed as encoding methods for the attribute data. For example, a method performed using a technology called lifting has been proposed (for example, see NPL 2). A method in which attribute data can be decoded to scalable data has also been proposed (for example, see NPL 3). Other than lifting, a method in which decoded attribute data can be referred to in LoD is also conceivable (for example, see NPL 4).

### [Citation List]

### [Non Patent Literature]

[NPL 1]
   R. Mekuria, Student Member IEEE, K. Blom, P. Cesar., Member, IEEE, "Design, Implementation and Evaluation of a Point Cloud Codec for Tele-Immersive Video," tcsvt_paper_submitted_february.pdf
[NPL 2]
   Khaled Mammou, Alexis Tourapis, Jungsun Kim, Fabrice Robinet, Valery Valentin, Yeping Su, "Lifting Scheme for Lossy Attribute Encoding in TMC1," ISO/IEC JTC1/SC29/WG11 MPEG2018/m42640, April 2018, San Diego, US
[NPL 3]
   Ohji Nakagami, Satoru Kuma, "[G-PCC] Spatial scalability support for G-PCC," ISO/IEC JTC1/SC29/WG11 MPEG2019/m47352, March 2019, Geneva, CH
[NPL 4]
   Toshiyasu Sugio, "[G-PCC] Reference structure modification on attribute predicting transform in TMC13," ISO/IEC JTC1/SC29/WG11 MPEG2018/m46107, January 2019, Marrakech, MA

### [Summary]

### [Technical Problem]

However, in the case of the scheme disclosed in NPL 4, attribute data is aligned and encoded in a Morton order in LoD. Therefore, the referable decoded attribute data is limited to attribute data located ahead of decoding target attribute data in the Morton order. That is, there is concern of the decoded attribute data being limited to attribute data at a point located in a biased direction from a point of decoding target attribute data in a 3-dimensional space. Therefore, prediction accuracy of prediction of processing target attribute data performed with reference to the decoded attribute data is decreased, and thus there is concern of encoding efficiency deteriorating.

The present disclosure has been devised in view of such circumstances to inhibit deterioration in encoding efficiency.

### [Solution to Problem]

An information processing device according to an aspect of the present technology is an information processing device including: a hierarchization unit configured to hierarchize attribute information of a point cloud in which 3-dimensional shaped objects are expressed as a set of points, and generate a reference relation of the attribute information between layers; and a sub-hierarchization unit configured to sub-hierarchize the attribute information of a layer in the layer of the attribute information generated by the hierarchization unit to generate a reference relation of the attribute information between sub-layers.

An information processing method according to another aspect of the present technology is an information processing method including: hierarchizing attribute information of a point cloud in which 3-dimensional shaped objects are expressed as a set of points to generate a reference relation of the attribute information between layers; and sub-hierarchizing the attribute information of a layer in the layer of the generated attribute information to generate a reference relation of the attribute information between sub-layers.

An information processing device according to still another aspect of the present technology is an information processing device including: a hierarchization unit configured to hierarchize attribute information of a point cloud in which 3-dimensional shaped objects are expressed as a set of points, and generate a reference relation of the attribute information between layers; a sub-hierarchization unit configured to sub-hierarchize the attribute information of a layer in the layer of the attribute information generated by the hierarchization unit to generate a reference relation of the attribute information between sub-layers; and an inverse hierarchization unit configured to inversely hierarchize the attribute information based on the reference relation of the attribute information between the layers generated by the hierarchization unit and the reference relation of the attribute information between the sub-layers generated by the sub-hierarchization unit.

An information processing method according to still another aspect of the present technology is an information processing method including: hierarchizing attribute information of a point cloud in which 3-dimensional shaped objects are expressed as a set of points to generate a reference relation of the attribute information between layers; sub-hierarchizing the attribute information of a layer in the layer of the generated attribute information to generate a reference relation of the attribute information between sub-layers; and inversely hierarchizing the attribute information based on the generated reference relation of the attribute information between the layers and the generated reference relation of the attribute information between the sub-layers.

In an information processing device and method according to still another aspect of the present technology, attribute information of a point cloud in which 3-dimensional shaped objects are expressed as a set of points is hierarchized to generate a reference relation of the attribute information between layers; and the attribute information of a layer in the layer of the generated attribute information is sub-hierarchized to generate a reference relation of the attribute information between sub-layers.

In the information processing device and method according to still another aspect of the present technology, attribute information of a point cloud in which 3-dimensional shaped objects are expressed as a set of points is hierarchized to generate a reference relation of the attribute information between layers; the attribute information of a layer in the layer of the generated attribute information is sub-hierarchized to generate a reference relation of the attribute information between sub-layers; and the attribute information is inversely hierarchized based on the generated reference relation of the attribute information between the layers and the generated reference relation of the attribute information between the sub-layers.

### [Brief Description of Drawings]

[Fig. 1]

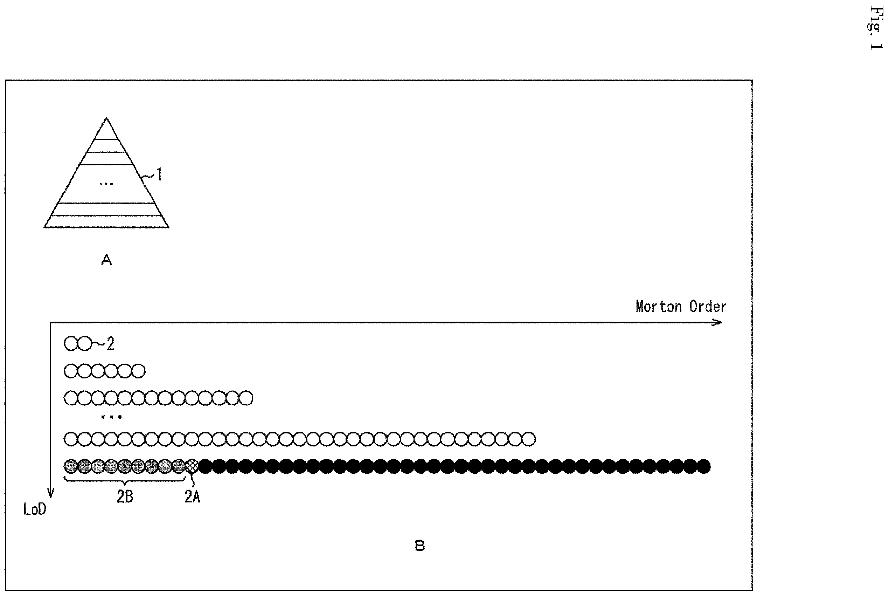

   Fig. 1 is a diagram illustrating an example of a reference relation of attribute information of the related art.
[Fig. 2]

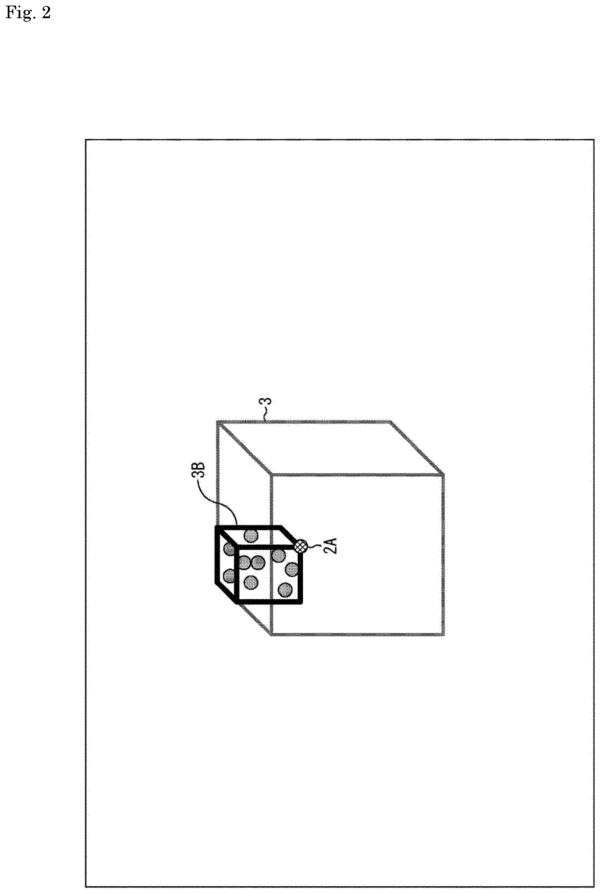

   Fig. 2 is a diagram illustrating an example of a reference relation in a Morton order in a layer.
[Fig. 3]

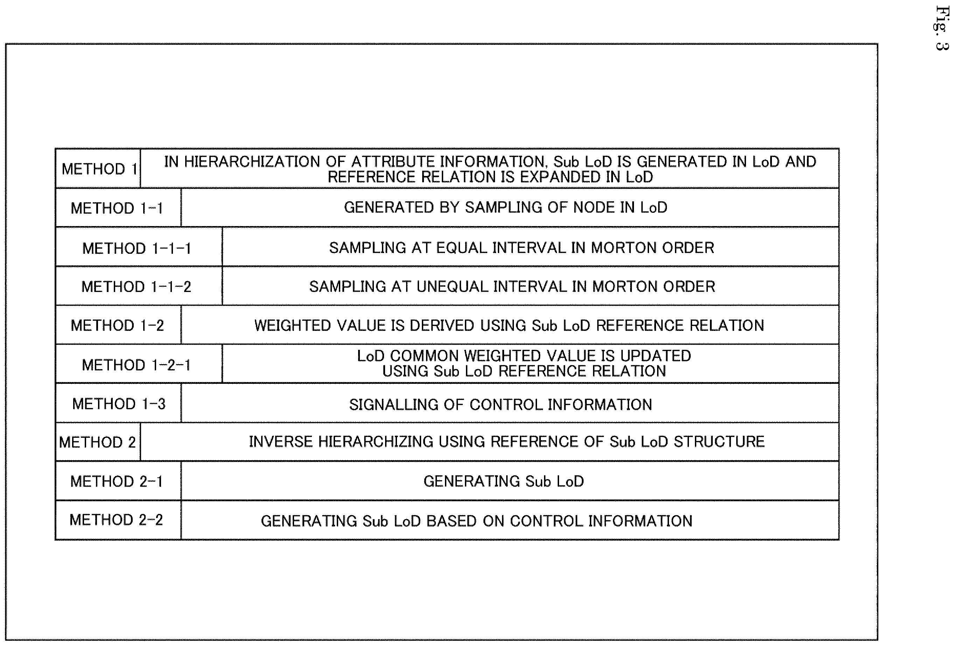

   Fig. 3 is a diagram illustrating a hierarchization scheme and an inverse hierarchization scheme for attribute data.
[Fig. 4]

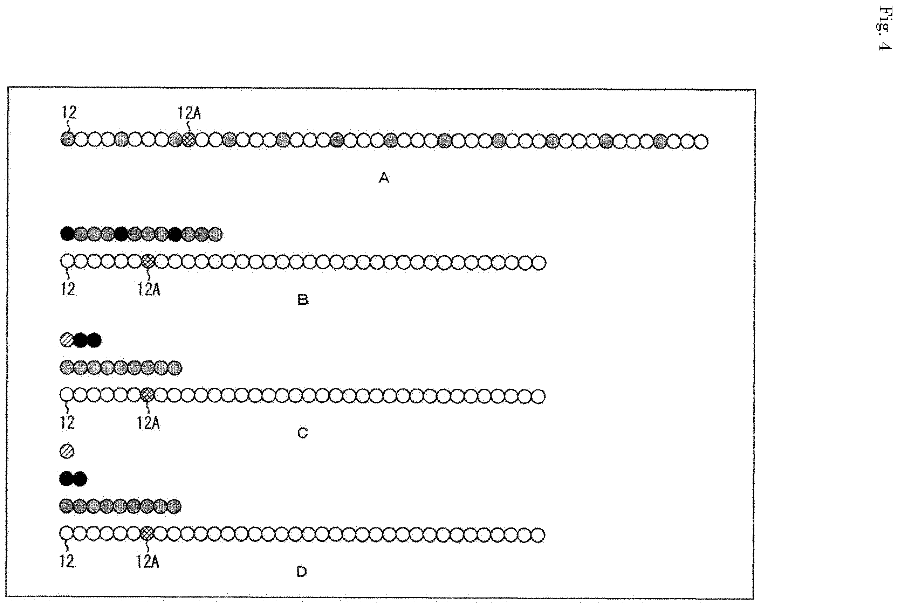

   Fig. 4 is a diagram illustrating an example of a phase of generation of Sub LoD.
[Fig. 5]

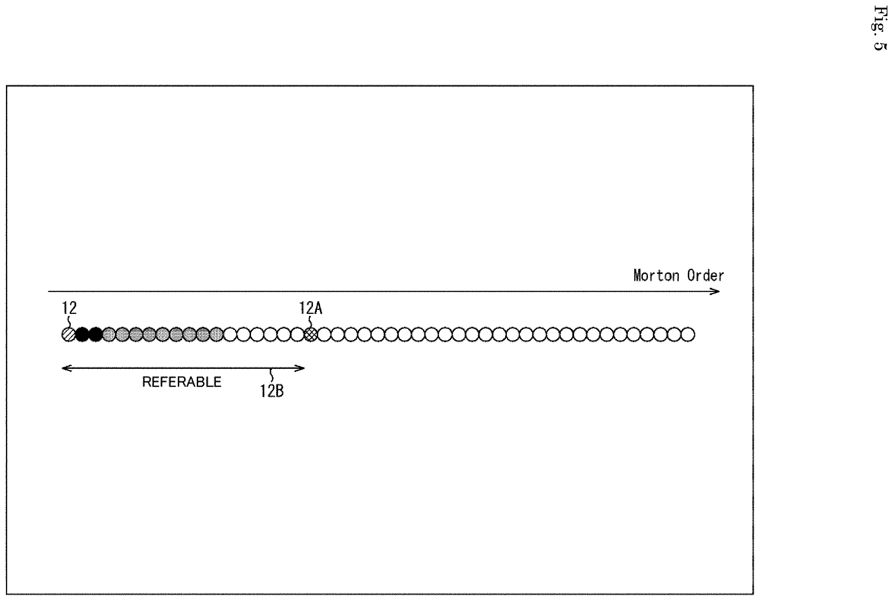

   Fig. 5 is a diagram illustrating an example of a phase of generation of the Sub LoD.
[Fig. 6]

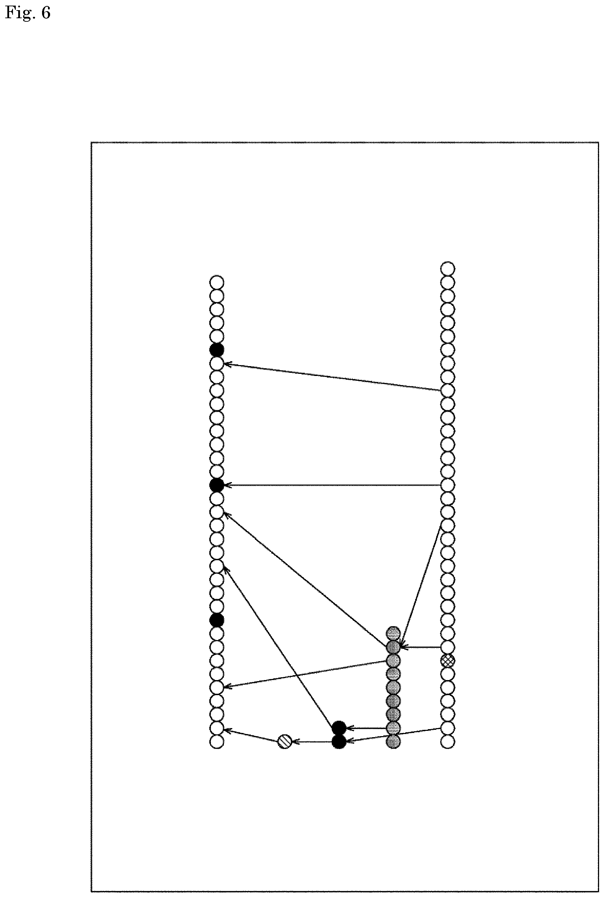

   Fig. 6 is a diagram illustrating an example of a phase of a reference relation.
[Fig. 7]

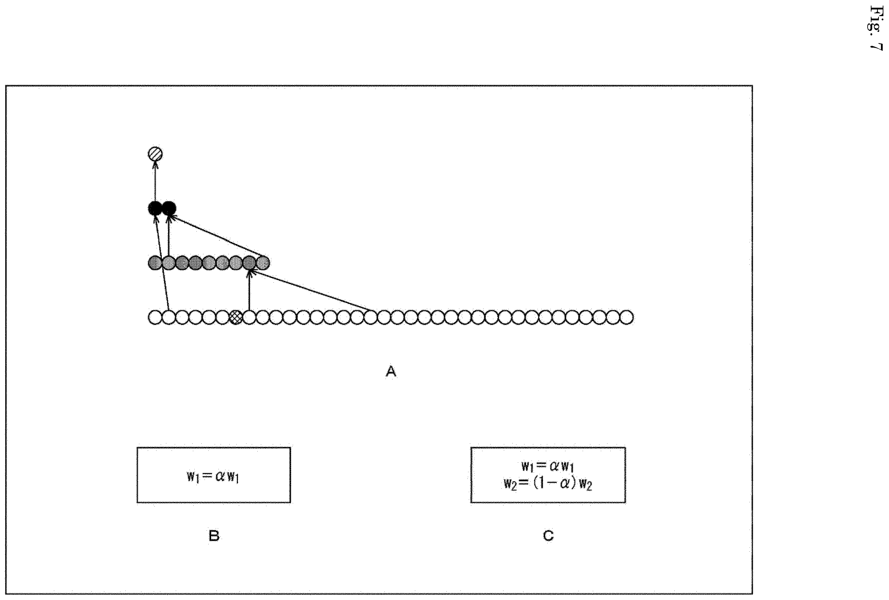

   Fig. 7 is a diagram illustrating an example of a phase of a reference relation.
[Fig. 8]

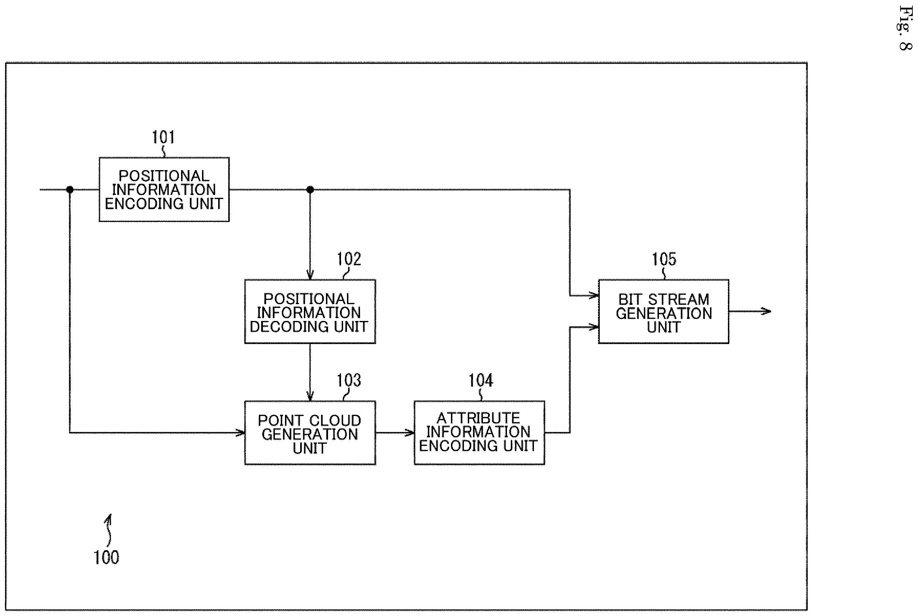

   Fig. 8 is a block diagram illustrating an exemplary main configuration of an encoding device.
[Fig. 9]

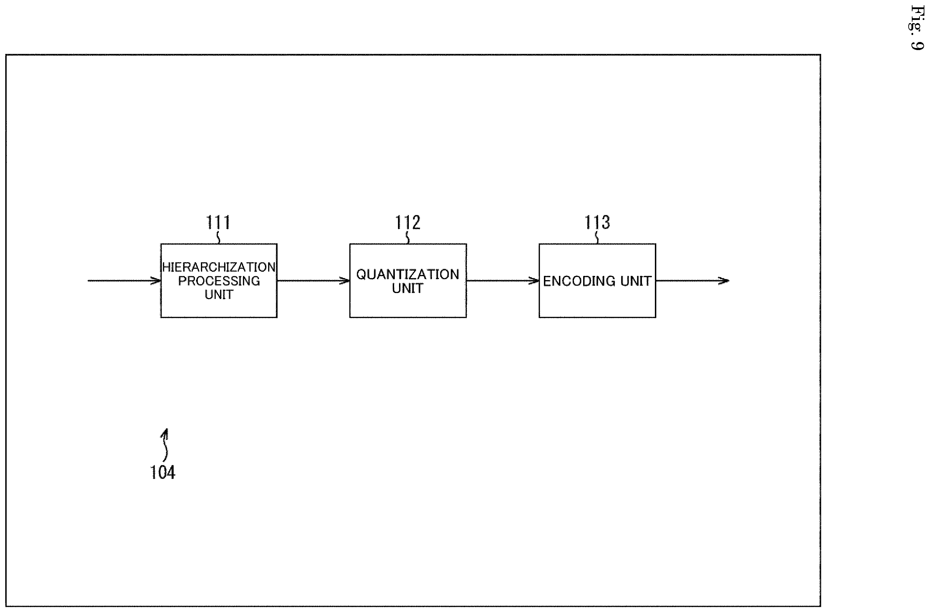

   Fig. 9 is a block diagram illustrating an exemplary main configuration of an attribute information encoding unit.
[Fig. 10]

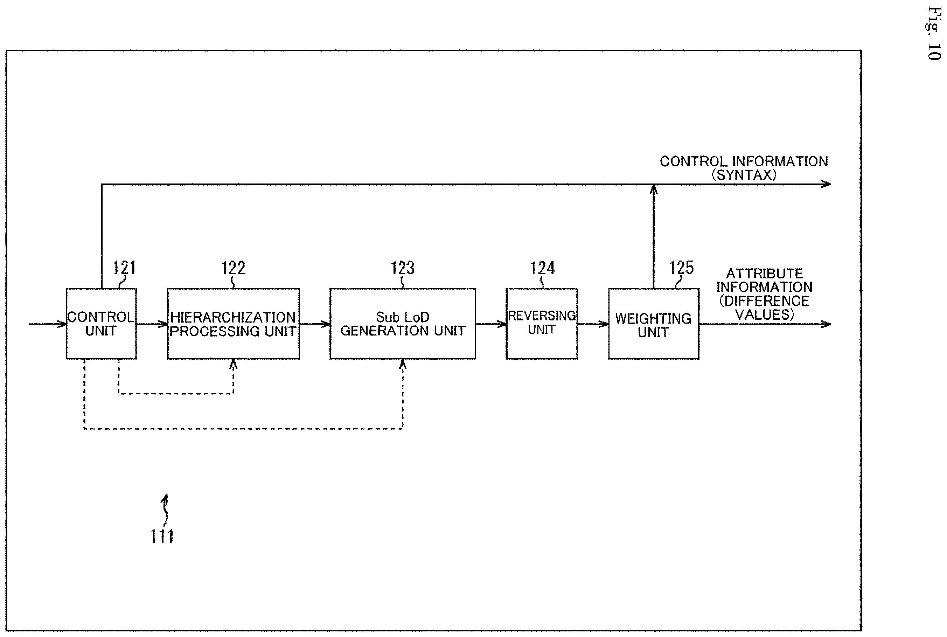

   Fig. 10 is a block diagram illustrating an exemplary main configuration of a hierarchization processing unit.
[Fig. 11]

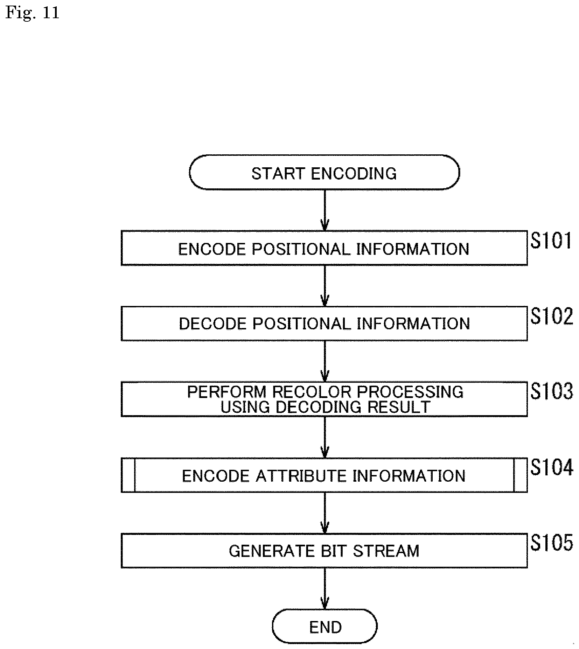

   Fig. 11 is a flowchart illustrating an example of a flow of encoding.
[Fig. 12]

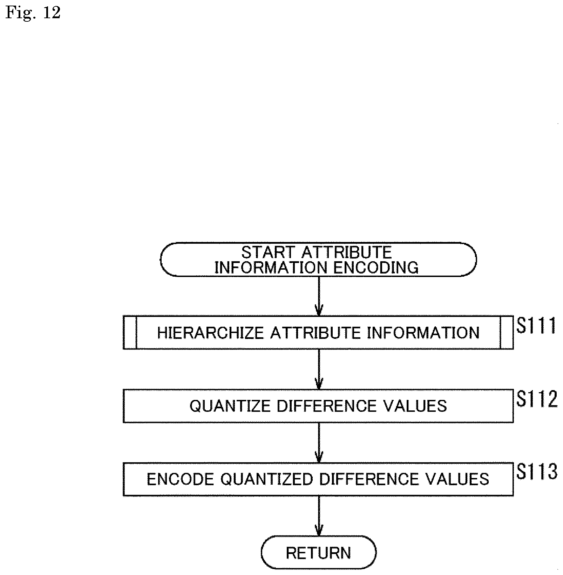

   Fig. 12 is a flowchart illustrating an example of a flow of attribute information encoding.
[Fig. 13]

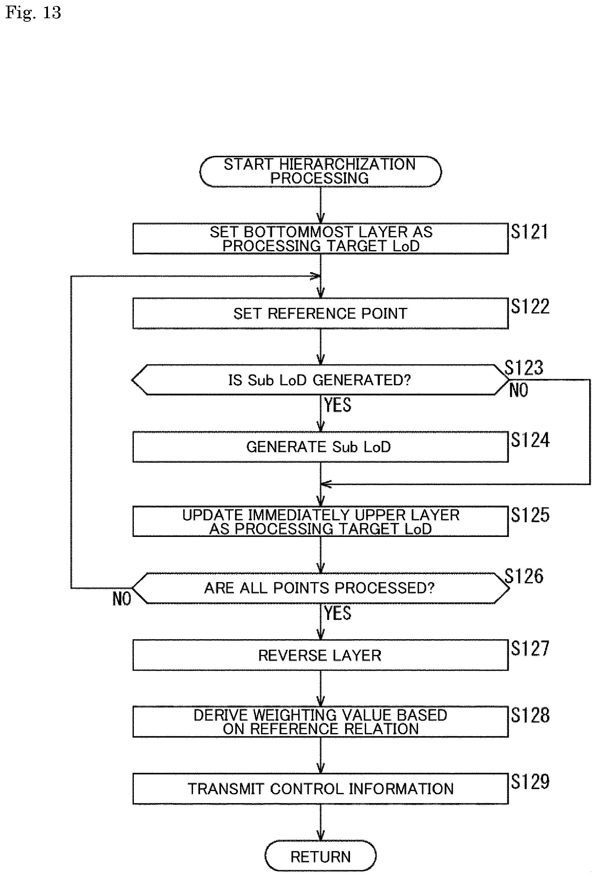

   Fig. 13 is a flowchart illustrating an example of a flow of hierarchization processing.
[Fig. 14]

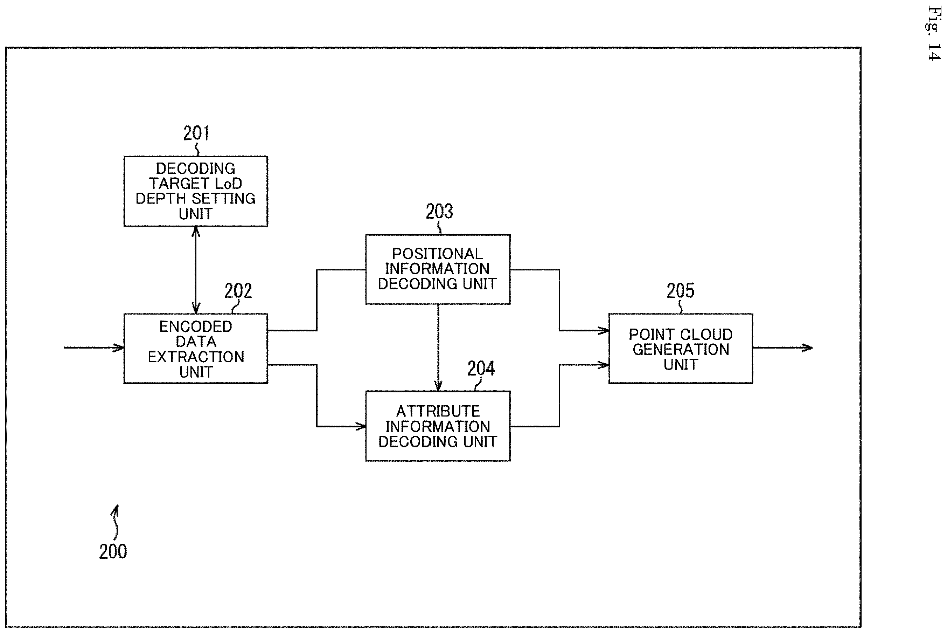

   Fig. 14 is a block diagram illustrating an exemplary main configuration of a decoding device.
[Fig. 15]

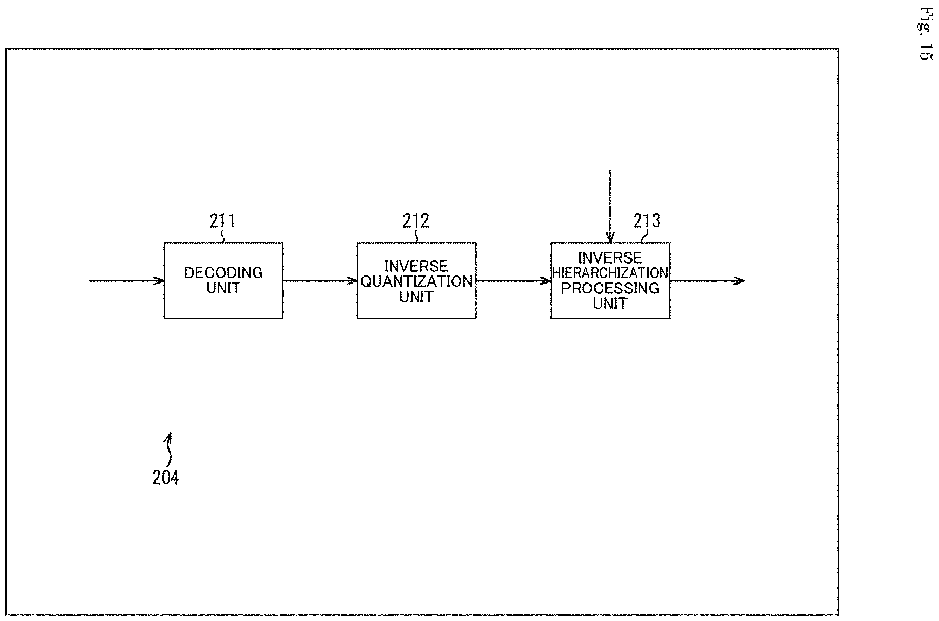

   Fig. 15 is a block diagram illustrating an exemplary main configuration of an attribute information decoding unit.
[Fig. 16]

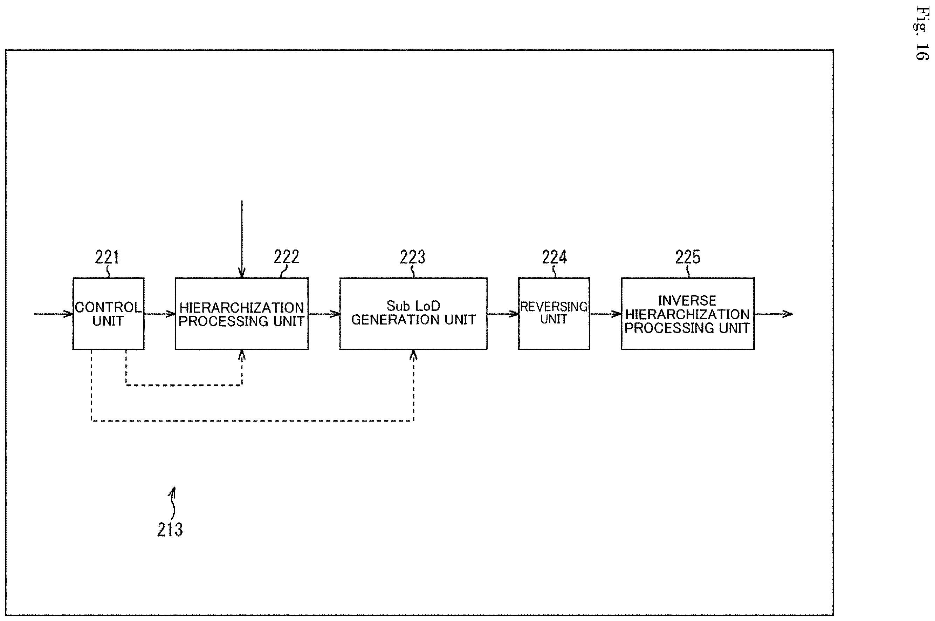

   Fig. 16 is a block diagram illustrating an exemplary main configuration of an inverse hierarchization processing unit.
[Fig. 17]

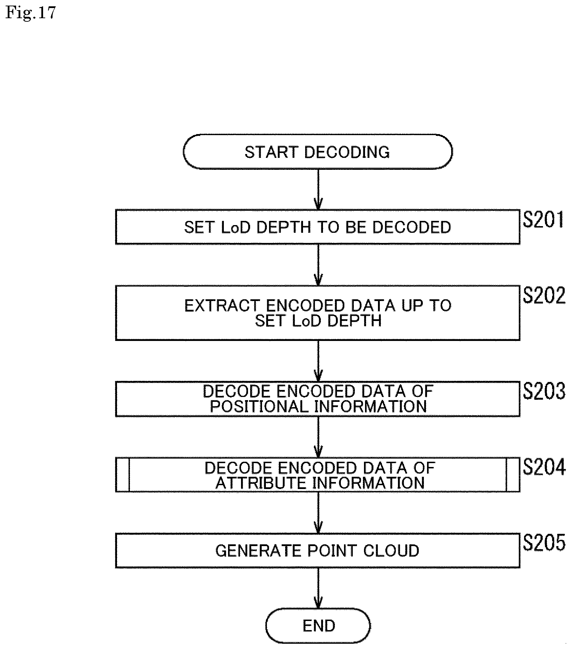

   Fig. 17 is a flowchart illustrating an example of a flow of decoding.
[Fig. 18]

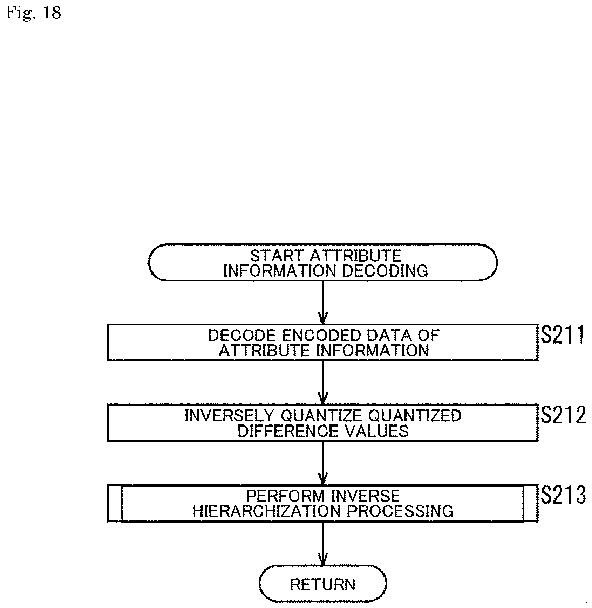

   Fig. 18 is a flowchart illustrating an example of a flow of attribute information decoding.
[Fig. 19]

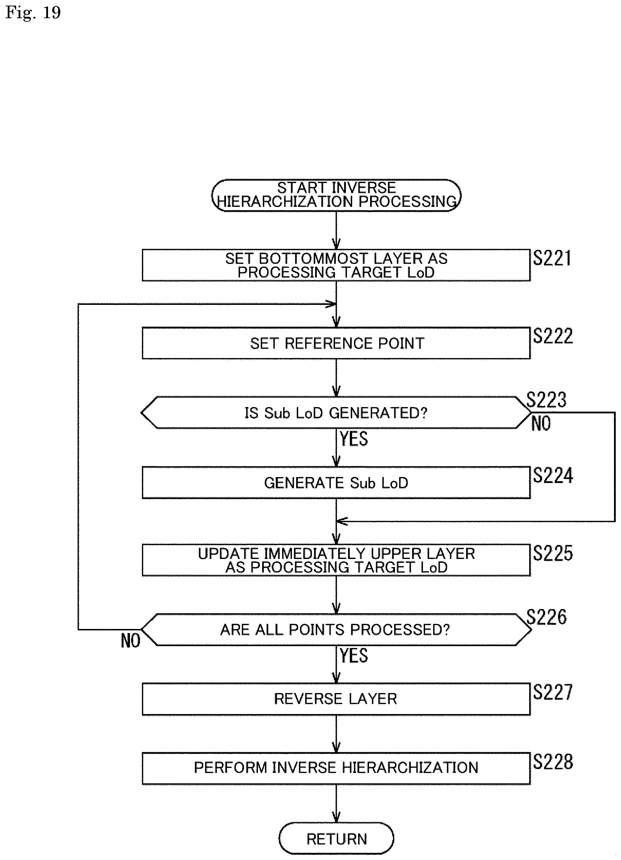

   Fig. 19 is a flowchart illustrating an example of a flow of inverse hierarchization processing.
[Fig. 20]

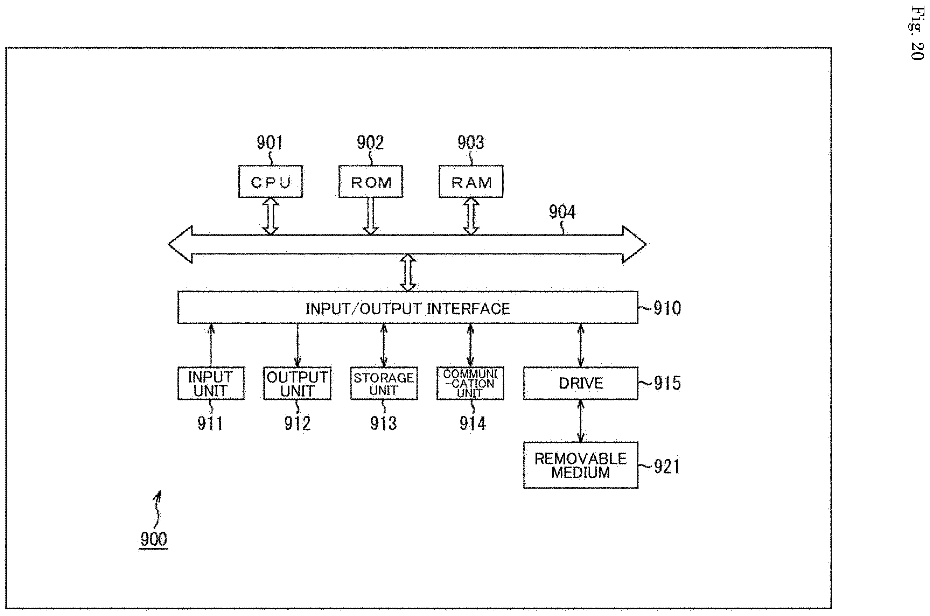

   Fig. 20 is a block diagram illustrating an exemplary main configuration of a computer.

### [Description of Embodiments]

Hereinafter, modes for carrying out the present disclosure (hereinafter referred as embodiment) will be described. The description will be made in the following order.
1. Generation of Sub LoD
2. First Embodiment (Encoding Device)
3. Second Embodiment (Decoding Device)
4. Supplements

### <1. Generation of Sub LoD>

### <Documents or the like Supporting Descriptive Content and Terminology>

The scope disclosed in the present technology includes not only content described in the embodiments but also content described in the following NPL known at the application time.

NPL 1: (described above)
NPL 2: (described above)
NPL 3: (described above)
NPL 4: (described above)

That is, the content described in the foregoing NPL are also the grounds when supporting requirements are determined.

### <Point Cloud>

In the related art, there is 3D data such as a point cloud indicating 3-dimensional structure using positional information, attribute information, or the like of a point group and a mesh configured with vertexes, edges, planes and defines a 3-dimensional shape with a polygonal expression.

For example, in the case of a point cloud, a 3-dimensional structure (a 3-dimensional shaped object) is expressed as a set of many points (a point group). That is, data of the point cloud (also referred to as point cloud data) is configured by geometry data of each point of the point group (also referred to as positional information) and attribute data (also referred to as attribute information). The attribute data can include any information. For example, color information, reflectivity information, and normal line information may be included in the attribute data. Accordingly, because the data structure is relatively simple and sufficiently many points are used, any 3-dimensional structure can be expressed with sufficient precision.

### <Quantizing Positional Information Using Voxel>

The amount of point cloud data is relatively large. Therefore, to compress the amount of data for encoding or the like, an encoding method using a voxel was conceived. The voxel is a 3-dimensional area for quantizing geometry data (positional information).

That is, a 3-dimensional area containing a point cloud is divided into small 3-dimensional areas called voxels. It is indicated whether each voxel contains a point. In this way, the position of each point is quantized in a voxel unit. Accordingly, by converting point cloud data into data of such a voxel (also referred to as voxel data), it is possible to inhibit an increase in an information amount (typically, to reduce the information amount).

### <Octree>

Further, for geometry data, it is conceivable that an octree is constructed using the voxel data. The octree is a tree structure of the voxel data. A value of each bit of a bottommost node of the octree indicates whether there is a point of each voxel. For example, a value "1" indicates a voxel containing a point and a value "0" indicates a voxel containing no point. In the octree, one node corresponds to eight voxels. That is, each node of the octree is configured by 8-bit data and 8 bits indicates whether there are point of eight voxels.

An upper node of the octree indicates whether there is a point in an area in which eight voxels corresponding to a lower node belonging to the node are summarized in one voxel. That is, an upper node is generated by summarizing information of the voxels of the lower node. When a node has a value of "0," that is, all the eight corresponding voxels do not contain points, the node is deleted.

In this way, a tree structure (octree) formed by a node of which a value is not "0" is constructed. That is, the octree can indicate whether there is a point in the voxel of each of resolutions. By forming the octree for the encoding and decoding the positional information from a highest resolution (a highest layer) to a desired layer (resolution), it is possible to restore the point cloud data at that resolution. That is, decoding can be performed at any resolution easily without decoding information regarding an unnecessary layer (resolution). In other words, it is possible to realize scalability of the voxels (resolution).

By omitting a node with the value of "0," as described above, the voxels of an area in which there are no points can be caused to have low resolution. Therefore, it is possible to further inhibit an increase in an amount of information (typically, reduce the information amount).

### <Lifting>

In contrast, when the attribute data (attribute information) is encoded, it is assumed that geometry data (positional information) having deterioration caused due to the encoding is known, and thus the encoding is performed using a positional relation between the points. As an encoding method for the attribute data, region adaptive hierarchical transform (RAHT) or a method in which transformation called lifting is used, as described in NPL 2, has been conceived. By applying such a technology, the attribute data can also be hierarchized as in the octree of the geometry data.

For example, in the case of the lifting described in NPL 2, the attribute data of each point is encoded as a differential value from a predicted value derived using the attribute data of the other points. At this time, the points are hierarchized and the differential values are derived in accordance with the hierarchical structure.

That is, for the attribute data of each point, the points are classified into prediction points and reference points, predicted values of the attribute data of the prediction points are derived using the attribute data of the reference points, and differential values between the predicted values and the attribute data of the prediction points are derived. By repeating such processing on the reference points recursively, the attribute data of the points is hierarchized.

Here, the hierarchical structure is generated independently from the hierarchical structure (for example, the octree) of the geometry data and basically does not correspond to the hierarchical structure of the geometry data. To restore the point cloud data, it is necessary to cause the geometry data and the attribute data to correspond to each other. Therefore, it is necessary to restore the geometry data and the attribute data up to the highest resolution (that is, the bottommost layer). That is, the scheme to which the lifting described in NPL 2 is applied does not correspond to scalable decoding for resolution.

### <Hierarchization Corresponding to Scalable Decoding>

In contrast, hierarchization described in NPL 3 corresponds to scalable decoding for resolution. In the case of the scheme described in NPL 3, the attribute data is hierarchized to match a hierarchical structure of an octree of geometry data. That is, when there are points in an area corresponding to voxels of the geometry data (when there is attribute data corresponding to the point), reference points and prediction points are selected so that there are points in voxels of a layer immediately above the voxels (there is attribute data corresponding to the points). That is, attribute information is hierarchized in accordance with the hierarchical structure of the octree of the geometry data.

By associating the hierarchical structure of the attribute data with the hierarchical structure of the geometry data, it is possible to restore the point cloud data with a desired resolution easily although decoding is not performed up to the bottommost layer. In this way, the scheme to which the technology described in NPL 3 is applied corresponds to scalable decoding for resolution.

### <Reference Relation in Layer>

According to the above-described scheme, a reference relation of the attribute information is generated between layers. That is, the attribute information of a processing target layer can be predicted with reference to attribute information of another layer.

In contrast, in the case of the scheme described in NPL 4, attribute information in a processing target layer can be referred to when the attribute information is decoded. For example, hierarchized attribute data (Attribute Lod) 1 illustrated in A of Fig. 1 is data hierarchized by classifying attribute data 2 for each point, as illustrated in B of Fig. 1. In B of Fig. 1, the vertical direction represents a layer (Level of Detail (LoD)) and each circle represents the attribute data 2 of each point. In B of Fig. 1, the reference numeral is given to only one circle, but the circles illustrated in B of Fig. 1 are all the attribute data 2 of each point.

The decoding is performed one layer at a time from the upper layer in sequence. Accordingly, when attribute data 2A of a certain point is decoded, the attribute data 2 of each point of the upper layer indicated by a white circle is decoded, and therefore can be referred to.

In the layer, the attribute data 2 of each point is aligned in the Morton order and is decoded in this order. In B of Fig. 1, the attribute data 2 of each point of each layer is aligned in the Morton order. In the drawing, a direction oriented from the left to the right in the horizontal direction corresponds to the Morton order.

That is, when the attribute data 2A of a certain point is decoded, the attribute data 2B of each point located to the left of the attribute data 2Ais in a decoded state, and thus can be referred to.

By aligning the attribute data in the Morton order, the attribute data 2 of each point is scanned for each 3-dimensional partial area obtained by dividing a 3-dimensional space. Therefore, directivity (bias) of a 3-dimensional space position occurs in the processing order.

For example, it is assumed that each point of the point cloud data is in a 3-dimensional area 3 of Fig. 2. As described above, in B of Fig. 1, the decoded attribute data 2B of each point is located ahead of the attribute data 2A of a certain point in the Morton order. Accordingly, in the 3-dimensional area 3 of Fig. 2, the decoded attribute data 2B of each point illustrated in B of Fig. 1 is inside a partial area 3B located in a predetermined direction from the view of the attribute data 2A of the certain point. That is, when the position of the attribute data 2A of the certain point is set as a reference, a bias occurs at a relative position (direction) of the decoded attribute data 2B of each point.

When the processing is performed in the Morton order, such a bias occurs in the reference direction at the time of prediction, prediction accuracy decreases due to the bias, and thus there is concern of the encoding efficiency deteriorating.

### <Sub-Hierarchization>

Accordingly, for example, as described in "Method 1" in the topmost stage of a table illustrated in Fig. 3, sub-layers (Sub LoD) are further generated in the layer (LoD) in hierarchization of the attribute data (attribute information) and a reference relation of the attribute data between the sub-layers is generated (that is, a reference relation of the attribute data in the layer (LoD) is generated).

For example, the attribute data (attribute information) of the point cloud in which 3-dimensional shaped objects are expressed as a set of points is hierarchized to generate a reference relation of the attribute data between the layers, and the attribute data of the layer is sub-hierarchized in the layer of the generated attributed data to generate a reference relation of the attribute data between the sub-layers.

For example, an information processing device includes: a hierarchization unit that hierarchizes the attribute data (attribute information) of a point cloud in which 3-dimensional shaped objects are expressed as a set of points to generate the reference relation of the attribute data between the layers; and a sub-hierarchization unit that sub-hierarchizes the attribute data of the layer in the layer of the attribute data generated by the hierarchization unit to generate a reference relation of the attribute data between the sub-layers.

In this way, the reference relation of the attribute data in the layers can be generated so that the bias in the prediction direction is inhibited, and thus it is possible to inhibit the deterioration in the encoding efficiency.

Any hierarchization scheme for the attribute data in this case can be used. For example, lifting which does not correspond to the scalable decoding described in NPL 2 may be used. For example, a hierarchization technology which correspond to the scalable decoding described in NPL 3 may be applied. Of course, another scheme may be used.

Any sub-hierarchization scheme can be used. For example, as described in "Method 1-1" in the second stage from the top of the table illustrated in Fig. 3, processing in which some of the attribute data of each point in the layer are sampled (selected) and sub-hierarchized may be repeated recursively. That is, sub-layers may be generated by sampling some of the attribute data from a node group of a processing target layer (LoD) in the hierarchical structure of the attribute data.

For example, as described in "Method 1-1-1" in the third stage from the top of the table illustrated in Fig. 3, the sub-layers may be generated by aligning the attribute data of a processing target layer in the Morton order and sampling some of the attribute data at equal intervals.

For example, as in the case of B of Fig. 1, for the hierarchized attribute data, the attribute data of each point of the layer in which the sub-hierarchization is performed is aligned in the Morton order. Then, the aligned attribute data of each point is sampled at equal intervals. Fig. 4 illustrates an example in which the sampling is performed at an interval of every third attribute data, that is, one of four pieces of data is sampled (LodUniformQuant = 4). LodUniformQuant is a syntax element indicating an interval of the sampling. LodUniformQuant = 4 indicates that one of four pieces of attribute data in a row of the attribute data of each point aligned in the Morton order is sampled. That is, when one piece of attribute data is sampled, the fourth attribute data from that attribute data in the Morton order is sampled next.

In A of Fig. 4, the attribute data 12 of each point indicated by a circle is aligned in the Morton order. One of four pieces of attribute data from that attribute data (the attribute data 12 of each point indicated by a gray circle) is sampled. That is, as illustrated in B of Fig. 4, a bottommost sub-layer (Sub LoD) formed from the unsampled attribute data 12 of each point indicated by a white circle is generated.

In the row of the sampled attribute data 12 of each point, similarly, one of four pieces of attribute data (the attribute data 12 of each point indicated by a black circle) is sample. That is, as illustrated in C of Fig. 4, a second sub-layer (Sub LoD) formed from the bottommost position of the unsampled attribute data 12 of each point indicated by a gray circle is generated.

In the row of the sampled attribute data 12 of each point, similarly, one of four pieces of attribute data (the attribute data 12 of each point indicated by a diagonal-line circle) is generated. That is, as illustrated in D of Fig. 4, a third sub-layer is generated from the bottommost position of the unsampled attribute data 12 of each point indicated by a black circle.

In this case, since the attribute data 12 of each single point is sampled, a bottommost sub-layer formed from the sampled attribute data 12 of each point is also generated (D of Fig. 4).

A reference relation between these sub-layers is generated. That is, the attribute data of the higher sub-layer are decoded earlier so that the attribute data of the higher sub-layer can be referred to.

In this case, since the whole row of the attribute data 12 of each point is sampled to generate the sub-layer, a bias in the position of the point in the 3-dimensional space is small. That is, compared to the method described in NPL 4, it is possible to inhibit the bias in the reference direction of the attribute data. Accordingly, it is possible to inhibit the decrease in the prediction accuracy and inhibit deterioration in the encoding efficiency.

Even in this case, since the attribute data 12 of each point is aligned in the Morton order, the attribute data relatively close in the 3-dimensional space can be referred to. Accordingly, it is possible to inhibit the decrease in the prediction accuracy and inhibit the deterioration in the encoding efficiency compared with the case in which the attribute data is selected at random.

Not only the attribute data of the higher sub-layer but also the decoded attribute data in the same sub-layer as processing target attribute data may be able to be referred to.

Fig. 5 illustrates a phase in which the attribute data 12 of each point of a certain layer is aligned in a decoding order. In this case, when attribute data 12A of a certain point is a decoding target, the attribute data 12 of each point within a range indicated by a two-way arrow 12B (that is, the attribute data 12 of each point located to the left of the attribute data 12A of the certain point) is in a decoding-finished state, and thus can be referred to. In this way, since the number of candidates for the reference point increases, it is possible to inhibit the decrease in the prediction accuracy and inhibit the deterioration in the encoding efficiency.

As described above, the attribute data is sampled at the equal interval when the sub-layer is generated. However, the present disclosure is not limited thereto and the attribute data may be sampled at an unequal interval. For example, as described in "Method 1-1-2" in the fourth stage from the top of the table illustrated in Fig. 3, the sub-layers may be generated by aligning the attribute data of a processing target layer in the Morton order and sampling some of the attribute data at an unequal interval.

For example, an interval at which the attribute data in the sub-layer is sampled may be set to an unequal interval (that is, the interval is not fixed). For example, an interval of three pieces of attribute data and an interval of two pieces of attribute data may be alternately repeated (LodUniformQuant = 2 or 3).

For example, the interval of the sampling may be changed for each sub-layer. For example, in the bottommost sub-layer, the sampling is performed at an interval of two pieces of attribute data (LodUniformQuant = 2). In the higher sub-layer, the sampling may be performed at an interval of four pieces of attribute data (LodUniformQuant = 4). That is, the interval of the sampling may be changed in accordance with depth of the sub-layer.

In this way, the interval of the sampling can be set in accordance with, for example, a resolution. For example, it is possible to inhibit a decrease in image quality or inhibit the deterioration in the encoding efficiency.

### <Weighted Value>

The sub-hierarchization may be reflected in a weighted value of the attribute data. In the case of a method of the related art, the attribute data of each point is weighted based on a reference relation (for example, a reference distance, a reference number, or the like) between the layers (LoD). As described above, when the sub-hierarchization is performed, reference relation (for example, a reference distance, a reference number, or the like) between the sub-layers may be reflected in the weighted value. That is, as described in "Method 1-2" of the fifth stage from the top of the table illustrated in Fig. 3, a weighted value may be derived using the reference relation between the sub-layers (Sub LoD).

For example, when the attribute data is hierarchized (LoD-ized) using the lifting described in NPL 2, a weighted value is set for each piece of attribute data based on the reference relation. When the attribute data hierarchized in accordance with a scheme of setting the weighted value in this way is sub-hierarchized, as similarly described above, the reference relation between the sub-layers is reflected in the weighted value set in each piece of attribute data. That is, the weighted value of each piece of attribute data is derived using reference relations constructed between the layers and the sub-layers, as indicated by arrows in Fig. 6. In this way, the reference relation between the sub-layers can be reflected in the weighted value between the layers generated in accordance with the scheme which does not correspond to the scalable decoding.

For example, when the attribute data is hierarchized (LoD-ized) using the scheme corresponding to the scalable decoding described in NPL 3, a weighted value (a weighted value of each layer) fixed for each layer (LoD) is allocated to each piece of attribute data. When the attribute data hierarchized in accordance with a scheme of setting the weighted value in this way is sub-hierarchized, as described above, as described in "Method 1-2-1" of the sixth stage from the top of the table illustrated in Fig. 3, the reference relation between the sub-layers is reflected to the weighted value of each layer. That is, the weighted value of each piece of attribute data is derived by updating the weighted value of each layer using the reference relation between the sub-layers, as indicated by arrows in A of Fig. 7.

For example, by setting a coefficient α in accordance with a reference number between the sub-layers and multiplying a weighted value w1 of each layer by the coefficient α, as illustrated in B of Fig. 7, the weighted value w1 of each layer may be updated.

When the weighted value w1 of a certain layer is updated, a weighted value w2 of another layer may be updated to correspond to the updating of the weighted value w1. For example, as illustrated in C of Fig. 7, when the weighted value w1 is multiplied by the coefficient α, the weighted value w2 may be multiplied by (1 - α).

In this way, the reference relation between the sub-layers can be reflected in the weighted value between the layers generated in accordance with the scheme which does not correspond to the scalable decoding. Accordingly, it is possible to further inhibit the deterioration in the encoding efficiency.

### <Signaling of Control Information>

As described in "Method 1-3" in the seventh stage from the top of the table illustrated in Fig. 3, signaling of control information regarding the sub-hierarchization of the attribute data may be performed. Any control content may be used.

### <sub_lod_enable_flag>

For example, signaling of control information indicating whether sub-hierarchization of the attribute data is permitted (transmitting from an encoding side to a decoding side) may be performed. The control information indicating whether the sub-hierarchization is permitted is flag information (for example, sub_lod_enable_flag) indicating whether the sub-hierarchization can be performed in a data unit of a target. For example, when sub_lod_enable_flag is true (for example, "1"), sub_lod_enable_flag indicates that the sub-hierarchization can be performed. Conversely, when sub_lod_enable_flag is false (for example, "0"), sub_lod_enable_flag indicates that the sub-hierarchization cannot be performed.

When sub_lod_enable_flag is not signaled (not transmitted), the decoding side may consider sub_lod_enable_flag to be false. When sub_lod_enable_flag is not signaled (not transmitted), the decoding side may consider sub_lod_enable_flag to be true.

When sub_lod_enable_flag is false, the sub-hierarchization is not permitted. Thus, the signaling of other control information regarding the sub-hierarchization in the data unit can be omitted. Accordingly, it is possible to inhibit the deterioration in the encoding efficiency. In other words, the decoding side can omit parsing of the other control information regarding the sub-hierarchization in the data unit. That is, the decoding side may parse the other control information regarding the sub-hierarchization only in the data unit in which sub_lod_enable_flag is true. Accordingly, it is possible to inhibit an increase in a load on the decoding.

As described above, the control information indicating whether the sub-hierarchization is permitted can be said to be control information indicating whether there is the signaling of the other control information regarding the sub-hierarchization in the data unit. The control information indicating whether the sub-hierarchization is permitted can be said to be control information indicating whether the sub-hierarchization is prohibited.

In the control information indicating whether the sub-hierarchization is permitted, any data unit can be set as a target, and thus the signaling may be performed in any data unit. For example, one piece of attribute data may be set as the data unit of the target and sub_lod_enable_flag may be signaled for each piece of attribute data. For example, the plurality of pieces of sub_lod_enable_flag may be collectively transmitted in each data unit higher than the attribute data (for example, for each sequence).

### <sub_lod_distance>

For example, control information for controlling an interval of the sampling in the sub-hierarchization (or a sampling period) may be signaled. The control information for controlling the interval of the sampling is information (for example, sub_lod_distance) indicating at which interval the sampling is performed when the sub-hierarchization is performed in the data unit of the target. For example, the case of sub_lod_distance = 2 indicates that the sampling period is 2, that is, one of two nodes is sampled (the sampling is performed every other interval). That is, when sub_lod_distance > 2, the sampling is performed at equal intervals and an interval indicated by sub_lod_distance to generate a sub-layer.

sub_lod_distance = 0 indicates that the sub-hierarchization is performed (sub-layer (Sub LoD) is not formed). That is, sub_lod_distance can be said to be control information indicating whether the sub-hierarchization is performed.

When sub_lod_distance is not signaled (not transmitted), the decoding side may consider sub_lod_distance = 0.

Further, the interval of the sampling may be an unequal interval. For example, with the same data units, the plurality of pieces of sub_lod_distance may be signaled and a plurality of intervals (periods) may be able to be allocated. For example, the value of sub_lod_distance may be set to "2" and "3," the intervals may be adopted in sequence as in 2→3→2→3, and the unequal interval may be realized. The interval of the sampling may be indicated by an identification number or the like of a table or a function.

As the control information for controlling the interval of the sampling in the sub-hierarchization, any data unit can be set as a target, and the signaling may be performed in any data unit. For example, the layer (LoD) of the attribute data may be set as a data unit of a target and sub_lod_distance may be signaled for each layer of the attribute data.

### <sub_lod_mode>

For example, control information (for example, sub_lod_mode) indicating a sampling method in the sub-hierarchization may be signaled.

For example, sub_lod_mode = 0 indicates that the sampling is performed at equal intervals and the same interval in all the sub-layers. That is, in this case, the sampling is performed at one kind of interval in all the sub-layers.

sub_lod_mode = 1 indicates that the interval of the sampling is Pattern 1 (an unequal interval). Similarly, sub_lod_mode = 2 indicates Pattern 2 (an unequal interval) in which the interval of the sampling is different from that of Pattern 1.

By performing the sampling at an unequal interval, the interval of the sampling can be changed in accordance with, for example, a depth of the sub-layer (SubLod). For example, the interval of the sampling can also be changed in the sub-layer. That is, in Patterns 1 and 2 described above, patterns of the interval of the sampling in all the sub-layers are shown. A method of taking a distance of a pattern can be overridden with a header or the like.

### <Others>

The control information regarding the sub-hierarchization is not limited to the above-described examples. The plurality of pieces of control information may be applied. For example, both sub_lod_distance and sub_lod_mode may be applied. For example, sub_lod_enable_flag may be applied along with sub_lod_distance, sub_lod_mode, or both sub_lod_distance and sub_lod_mode.

### <Inverse Hierarchization>

The attribute data hierarchized and sub-hierarchized in this way may be inversely hierarchized using the reference relation between the sub-layers (Sub LoD) as described in "Method 2" of the eighth stage from the top of the table illustrated in Fig. 3.

For example, as described in "Method 2-1" of the ninth stage from the top of the table illustrated in Fig. 3, sub-layers (Sub LoD) may be generated similarly with the case of above-described "Method 1" and inverse hierarchization may be performed using the reference relation between the generated sub-layers.

For example, the attribute data (attribute information) of a point cloud in which 3-dimensional shaped objects are expressed as a set of points may be hierarchized to generate the reference relation of the attribute data between the layers, the attribute data in the layer may be sub-hierarchized to generate a reference relation of the attribute data between the sub-layers, and the attribute data may be inversely hierarchized based on the generated reference relation of the attribute data between the layers and the generated reference relation of the attribute data between the sub-layers.

For example, an information processing device may include: a hierarchization unit that hierarchizes the attribute data (attribute information) of a point cloud in which 3-dimensional shaped objects are expressed as a set of points to generate the reference relation of the attribute data between the layers; a sub-hierarchization unit that sub-hierarchizes the attribute data in the layer generated by the hierarchization unit to generate a reference relation of the attribute data between the sub-layers; and an inverse hierarchization unit that inversely hierarchizes the attribute data based on the reference relation of the attribute data between the layers generated by the hierarchization unit and the reference relation of the attribute data between the sub-layers generated by the sub-hierarchization unit.

In this way, it is possible to inversely hierarchize the attribute data hierarchized and sub-hierarchized by applying the above-described "Method 1" or the like correctly. Accordingly, it is possible to inhibit the deterioration in the encoding efficiency.

In the sub-hierarchization, for example, "Method 1-1-1" of the third stage from the top of the table illustrated in Fig. 3 may be applied. That is, the sub-layers may be generated by aligning the attribute data of the processing target layer in the Morton order and sampling some of the attribute data at equal intervals.

In the sub-hierarchization, for example, "Method 1-1-2" of the fourth stage from the top of the table illustrated in Fig. 3 may be applied. That is, the sub-layers may be generated by aligning the attribute data of the processing target layer in the Morton order and sampling some of the attribute data at the unequal interval.

In the sub-hierarchization, for example, as described in "Method 2-2" of the tenth stage from the top of the table illustrated in Fig. 3, the sub-layers (Sub LoD) may be generated based on the control information regarding the sub-hierarchization of the attribute data signaled as in the above-described "Method 1-3" and the inverse hierarchization may be performed using the reference relation between the generated sub-layers.

For example, the attribute data may be sub-hierarchized based on the control information (for example, sub_lod_enable_flag) indicating whether the above-described sub-hierarchization of the attribute data is permitted.

For example, the attribute data may be sub-hierarchized based on the control information (for example, sub_lod_distance) indicating the above-described interval of the sampling the attribute data.

Further, for example, the attribute data may be sub-hierarchized based on the control information (for example, sub_lod_mode) indicating the above-described sampling method for the attribute data.

Of course, the attribute data may be sub-hierarchized based on other control information. The attribute data may be sub-hierarchized based on the plurality of pieces of control information.

By performing the inverse hierarchization in this way, it is possible to inversely hierarchize the sub-hierarchized attribute data more accurately. Accordingly, it is possible to inhibit the bias in the direction of the prediction and it is possible to inhibit the deterioration in the encoding efficiency.

### <2. First Embodiment>

### <Encoding Device>

Next, a device to which the present technology described above in <1. Generation of Sub LoD> is applied will be described. Fig. 8 is a block diagram illustrating an example of a configuration of an encoding device which is a kind of information processing device to which the present technology is applied. An encoding device 100 illustrated in Fig. 8 is a device that encodes a point cloud (3D data). The encoding device 100 encodes a point cloud by applying the present technology described above in <1. Generation of Sub LoD>.

In Fig. 8, main processing units, flows of data, and the like are mainly illustrated, and the present disclosure is not limited to these illustrated in Fig. 8. That is, in the encoding device 100, processing units which are not illustrated in as blocks in Fig. 8 may be included, or processing or flows of data which are not indicated in Fig. 8 by arrows or the like may be included.

As illustrated in Fig. 8, the encoding device 100 includes a positional information encoding unit 101, a positional information decoding unit 102, a point cloud generation unit 103, an attribute information encoding unit 104, and a bit stream generation unit 105.

The positional information encoding unit 101 encodes geometry data (positional information) of the point cloud (3D data) input to the encoding device 100. Any encoding method may be used as long as the method is a method corresponding to scalable decoding. For example, the positional information encoding unit 101 hierarchizes the geometry data to generate an octree and encodes the octree. For example, processing such as filtering or quantization may be performed to inhibit noise (perform denoising). The positional information encoding unit 101 supplies the encoded data of the generated geometry data to the positional information decoding unit 102 and the bit stream generation unit 105.

The positional information decoding unit 102 acquires the encoded data of the geometry data supplied from the positional information encoding unit 101 and decodes the encoded data. Any decoding method can be used as long as the decoding method is a method corresponding to the encoding by the positional information encoding unit 101. For example, processing such as filtering or inverse quantization may be performed for denoising. The positional information decoding unit 102 supplies the generated geometry data (a decoding result) to the point cloud generation unit 103.

The point cloud generation unit 103 acquires the attribute data (the attribute information) of the point cloud input to the encoding device 100 and the geometry data (the decoding result) supplied from the positional information decoding unit 102. The point cloud generation unit 103 performs processing (recolor processing) of fitting the attribute data to the geometry data (the decoding result). The point cloud generation unit 103 supplies the attribute data caused to correspond to the geometry data (the decoding result) to the attribute information encoding unit 104.

The attribute information encoding unit 104 acquires the geometry data (the decoding result) and the attribute data supplied from the point cloud generation unit 103. The attribute information encoding unit 104 encodes the attribute data using the geometry data (the decoding result) to generate encoded data of the attribute data.

At this time, the attribute information encoding unit 104 encodes the attribute data by applying the present technology described above in <1. Generation of Sub LoD>. For example, the attribute information encoding unit 104 further generates the sub-layers (Sub LoD) in the layer (LoD) in the hierarchization of the attribute data (the attribute information) and generates the reference relation of the attribute data between the sub-layers. The attribute information encoding unit 104 supplies the generated encoded data of the attribute data to the bit stream generation unit 105.

The bit stream generation unit 105 acquires the encoded data of the geometry data supplied from the positional information encoding unit 101. The bit stream generation unit 105 acquires the encoded data of the attribute data supplied from the attribute information encoding unit 104. The bit stream generation unit 105 generates a bit stream including the encoded data. The bit stream generation unit 105 outputs the generated bit stream to the outside of the encoding device 100.

In such a configuration, the encoding device 100 generates the sub-layers in the layer, generates the reference relation of the attribute data between the sub-layers, and performs encoding of the attribute data using the reference relation. Thus, it is possible to generate the reference relation of the attribute data in the layer so that the bias in the direction of the prediction is inhibited, and it is possible to inhibit the deterioration in the encoding efficiency.

The processing units (the positional information encoding unit 101 to the bit stream generation unit 105) of the encoding device 100 each have any configuration. For example, each processing unit may be configured by a logical circuit that realizes the above-described processing. Each processing unit may include, for example, a central processing unit (CPU), a read-only memory (ROM), and a random access memory (RAM) and realize the above-described processing by executing a program using them. Of course, each processing unit may have both the configurations, and some of the above-described processing may be realized by a logical circuit and the other processing may be realized by executing a program. The configuration of each processing unit may be independent each other. For example, some of the processing units may realize some of the above-described processing by a logical circuit and the other processing units may realize the above-described processing by executing a program. Further, the other processing units may execute the above-described processing using both the logical circuit and the program.

### <Attribute Information Encoding Unit>

Fig. 9 is a block diagram illustrating an exemplary main configuration of the attribute information encoding unit 104 (Fig. 8). In Fig. 9, main processing units, flows of data, and the like are mainly illustrated, and the present disclosure is not limited to these illustrated in Fig. 9. That is, in the attribute information encoding unit 104, processing units which are not illustrated in as blocks in Fig. 9 may be included, or processing or flows of data which are not indicated in Fig. 9 by arrows or the like may be included.

As illustrated in Fig. 8, the attribute information encoding unit 104 includes a hierarchization processing unit 111, a quantization unit 112, and an encoding unit 113.

The hierarchization processing unit 111 performs processing related to hierarchization of the attribute data. For example, the hierarchization processing unit 111 acquires the attribute data or the geometry data (the decoding result) supplied from the point cloud generation unit 103. The hierarchization processing unit 111 hierarchizes the attribute data using the geometry data. At this time, the hierarchization processing unit 111 performs the hierarchization by applying the present technology described in <1. Generation of Sub LoD>. For example, the hierarchization processing unit 111 further generates the sub-layers (Sub LoD) in the layer (LoD) in the hierarchization of the attribute data (the attribute information) and generates the reference relation of the attribute data between the sub-layers. The hierarchization processing unit 111 supplies the hierarchized attribute data (difference values) to the quantization unit 112.

At this time, the hierarchization processing unit 111 can also generate the control information regarding the sub-hierarchization. In this case, the hierarchization processing unit 111 also supplies the generated control information to the quantization unit 112 along with the attribute data (the difference values).

The quantization unit 112 acquires the attribute data supplied from the hierarchization processing unit 111 (also the control information when the control information is generated in the hierarchization processing unit 111). The quantization unit 112 quantizes the attribute data. Any quantization method can be used. The quantization unit 112 supplies the quantized attribute data (and the control information) to the encoding unit 113.

The encoding unit 113 acquires the quantized attribute data (and the control information) supplied from the quantization unit 112. The encoding unit 113 encodes the attribute data to generate encoded data of the attribute data. Any encoding method can be used. When the control information regarding the sub-hierarchization is supplied, the encoding unit 113 includes the control information in the generated encoded data. In other words, the encoding unit 113 generates the encoded data of the attribute data including the control information regarding the sub-hierarchization. The encoding unit 113 supplies the generated encoded data to the bit stream generation unit 105.

By performing the hierarchization in this way, the attribute information encoding unit 104 can generate the sub-layers in the layer, generate the reference relation of the attribute data between the sub-layers, and perform encoding of the attribute data using the reference relation. Thus, it is possible to generate the reference relation of the attribute data in the layer so that the bias in the direction of the prediction is inhibited, and it is possible to inhibit the deterioration in the encoding efficiency.

These processing units (the hierarchization processing unit 111 to the encoding unit 113) have any configuration. For example, each processing unit may be configured by a logical circuit that realizes the above-described processing. Each processing unit may include, for example, a CPU, a ROM, and a RAM and realize the above-described processing by executing a program using them. Of course, each processing unit may have both the configurations, and some of the above-described processing may be realized by a logical circuit and the other processing may be realized by executing a program. The configuration of each processing unit may be independent each other. For example, some of the processing units may realize some of the above-described processing by a logical circuit and the other processing units may realize the above-described processing by executing a program. Further, the other processing units may execute the above-described processing using both the logical circuit and the program.

### <Hierarchization Processing Unit>

Fig. 10 is a block diagram illustrating an exemplary main configuration of the hierarchization processing unit 111 (Fig. 9). In Fig. 10, main processing units, flows of data, and the like are mainly illustrated, and the present disclosure is not limited to these illustrated in Fig. 10. That is, in the hierarchization processing unit 111, processing units which are not illustrated in as blocks in Fig. 10 may be included, or processing or flows of data which are not indicated in Fig. 10 by arrows or the like may be included.

As illustrated in Fig. 10, the hierarchization processing unit 111 includes a control unit 121, a hierarchization processing unit 122, a Sub LoD generation unit 123, a reversing unit 124, and a weighting unit 125.

The control unit 121 performs processing related to control of the hierarchization and the sub-hierarchization. For example, the control unit 121 acquires the attribute data or the geometry data (the decoding result) supplied from the point cloud generation unit 103. The control unit 121 supplies the acquired attribute data or geometry data (the decoding result) to the hierarchization processing unit 122.

The control unit 121 controls the hierarchization processing unit 122 or the Sub LoD generation unit 123 such that the hierarchization or the sub-hierarchization is performed. For example, the control unit 121 causes the hierarchization or the sub-hierarchization to be performed by applying the present technology described in <1. Sub LoD>. For example, the control unit 121 causes the sub-hierarchization to be performed on a desired layer. That is, the control unit 121 can cause the sub-hierarchization to be performed on some of the layers or can also cause the sub-hierarchization to be performed on all of the layers.

The control unit 121 can also generate the control information regarding the sub-hierarchization of the attribute data. For example, the control unit 121 can generate various syntax elements (for example, sub_lod_enable_flag, sub_lod_distance, and sub_lod_mode) descried above in <1. Generation of Sub LoD> as control information. The control unit 121 supplies the control information generated in this way to the quantization unit 112 and transmits the control information to the decoding side.

The hierarchization processing unit 122 performs processing related to the hierarchization of the attribute data. For example, the hierarchization processing unit 122 acquires the attribute data or the geometry data (the decoding result) supplied from the control unit 121.

The hierarchization processing unit 122 hierarchizes the acquired attribute data using the acquired geometry data under the control of the control unit 121. Any hierarchization scheme can be used. For example, a scheme which does not correspond to the scalable decoding such as lifting described in NPL 2 may be used or a scheme which corresponds to the scalable decoding described in NPL 3 may be used. The hierarchization processing unit 122 supplies the hierarchized attribute data or geometry data to the Sub LoD generation unit 123.

The Sub LoD generation unit 123 performs processing related to the sub-hierarchization. For example, the Sub LoD generation unit 123 acquires the hierarchized attribute data or geometry data supplied from the hierarchization processing unit 122.

The Sub LoD generation unit 123 generates the sub-layers in the layer of the attribute data under the control of the control unit 121. The Sub LoD generation unit 123 performs the sub-hierarchization using he geometry data. That is, the Sub LoD generation unit 123 generates the reference relation of the attribute data in the layer (LoD) as in "Method 1" in the topmost stage of a table illustrated in Fig. 3 described above in <1. Generation of Sub LoD>.

In this way, the Sub LoD generation unit 123 can generate the reference relation of the attribute data in the layers so that the bias in the prediction direction is inhibited, and thus it is possible to inhibit the deterioration in the encoding efficiency.

Any generation method can be used. For example, the Sub LoD generation unit 123 may recursively repeat processing in which some of the attribute data of each point in the layer are sampled (selected) and sub-hierarchized as in "Method 1-1" in the second stage from the top of the table illustrated in Fig. 3.

The Sub LoD generation unit 123 may generate the sub-layers by aligning the attribute data of a processing target layer in the Morton order and sampling some of the attribute data at equal intervals as described in "Method 1-1-1" in the third stage from the top of the table illustrated in Fig. 3.

The Sub LoD generation unit 123 may generate the sub-layers by aligning the attribute data of a processing target layer in the Morton order and sampling some of the attribute data at an unequal interval as described in "Method 1-1-2" in the fourth stage from the top of the table illustrated in Fig. 3.

Of course, any of other methods may be used. When the control unit 121 does not permit the sub-hierarchization, the Sub LoD generation unit 123 can omit the sub-hierarchization. That is, the Sub LoD generation unit 123 can perform the sub-hierarchization on only the layer permitted by the control unit 121.

The Sub LoD generation unit 123 supplies the sub-hierarchized attribute data to the reversing unit 124 under the control of the control unit 121 in this way.

The reversing unit 124 performs processing related to reversing of the layer. For example, the reversing unit 124 acquires the attribute data supplied from the Sub LoD generation unit 123. In the attribute data, information regarding each layer is hierarchized in the generation order.

The reversing unit 124 reverse the layer of the attribute data. For example, the reversing unit 124 attaches a layer number in an opposite order to the generation order to each layer of the attribute data (numbers for identifying layers of which a value is added by 1 whenever the layer is lowered by one layer from the topmost layer 0 and with which a layer in which the bottommost layer has the maximum number). That is, by attaching the layer number to the data of each layer, each layer is generated in order from the bottommost layer to the topmost layer.

The reversing unit 124 supplies the attribute data in which the layer is reversed to the weighting unit 125.

The weighting unit 125 performs processing related to weighting. For example, the weighting unit 125 acquires the attribute data supplied from the reversing unit 124. The weighting unit 125 derives a weighted value of the acquired attribute data. Any method of deriving the weighted value can be used.

For example, the weighting unit 125 may derive the weighted value using the reference relation between the sub-layers (Sub LoD) as in "Method 1-2" of the fifth stage from the top of the table illustrated in Fig. 3 described above in

### <Generation of Sub LoD>.

When the hierarchization (LoD-ization) of the attribute data is performed using the lifting described in NPL 2, the weighting unit 125 may reflect the reference relation of the attribute data between the sub-layers in the weighted value set in each piece of attribute data in the hierarchization. That is, the weighting unit 125 may derive the weighted value in accordance with both the reference relation of the attribute data between the layers and the reference relation of the attribute data between the sub-layers.

When the hierarchization (LoD-ization) of the attribute data is performed using the scheme corresponding to the scalable decoding described in NPL 3, the weighting unit 125 may reflect the reference relation of the attribute data between the sub-layers in the weighted value of each layer generated in the hierarchization as in "Method 1-2-1" of the sixth stage from the top of the table illustrated in Fig. 3.

Of course, any of other methods may be used. The weighting unit 125 may omit the weighting.

The weighting unit 125 derives a prediction value by performing prediction of the attribute data of each point using the reference relation of the attribute data and the weighted value derived as described above. The weighting unit 125 derives the difference value between the attribute data of each point and the prediction value.

The weighting unit 125 supplies the derived attribute data (the difference value) to the quantization unit 112 (Fig. 9). The weighting unit 125 may supply the derived weighted value as control information to the quantization unit 112 and transmit the weighted value to the decoding side.

These processing units (the control unit 121 to the weighting unit 125) have any configuration. For example, each processing unit may be configured by a logical circuit that realizes the above-described processing. Each processing unit may include, for example, a CPU, a ROM, and a RAM and realize the above-described processing by executing a program using them. Of course, each processing unit may have both the configurations, and some of the above-described processing may be realized by a logical circuit and the other processing may be realized by executing a program. The configuration of each processing unit may be independent each other. For example, some of the processing units may realize some of the above-described processing by a logical circuit and the other processing units may realize the above-described processing by executing a program. Further, the other processing units may execute the above-described processing using both the logical circuit and the program.

### <Flow of Encoding>

Next, processing performed by the encoding device 100 will be described. The encoding device 100 encodes data of a point cloud by performing encoding. An example of a flow of the encoding will be described with reference to the flowchart of Fig. 11.

When the encoding starts, the positional information encoding unit 101 of the encoding device 100 encodes the geometry data (the positional information) of the input point cloud to generate encoded data of the geometry data in step S101.

In step S102, the positional information decoding unit 102 decodes the encoded data of the geometry data generated in step S101 to generate the positional information.

In step S103, the point cloud generation unit 103 performs the recolor processing using the attribute data (the attribute information) of the input point cloud and the geometry data (the decoding result) generated in step S102 to match the attribute data to the geometry data.

In step S104, the attribute information encoding unit 104 encodes the attribute data subjected to the recolor processing in step S103 to generate the encoded data of the attribute data by performing attribute information encoding. At this time, the attribute information encoding unit 104 performs the processing by applying the present technology described above in <1. Generation of Sub LoD>. The details of the attribute information encoding will be described below.

In step S105, the bit stream generation unit 105 generates and outputs a bit stream including the encoded data of the geometry data generated in step S101 and the encoded data of the attribute data generated in step S104.

When the processing of step S105 ends, the encoding ends.

By performing the processing of each step in this way, the encoding device 100 can generate the reference relation of the attribute data in the layer so that the bias in the direction of the prediction is inhibited, and can inhibit the deterioration in the encoding efficiency.

### <Flow of Attribute Information Encoding>

Next, an example of a flow of attribute information encoding performed in step S104 of Fig. 11 will be described with reference to the flowchart of Fig. 12.

When the attribute information encoding starts, the hierarchization processing unit 111 of the attribute information encoding unit 104 hierarchizes the attribute data by performing the hierarchization processing and derives the difference values of the attribute data of each point in step S111. At this time, the hierarchization processing unit 111 performs the hierarchization by applying the present technology described above in <1. Generation of Sub LoD>. The details of the hierarchization processing will be described below.

In step S112, the quantization unit 112 quantizes each difference value derived in step S111.

In step S113, the encoding unit 113 encodes the difference values quantized in step S112 to generate the encoded data of the attribute data. When the control information is generated in the hierarchization processing of step S111, the encoding unit 113 generates the encoded data of the attribute data that also includes the control information.

When the processing of step S113 ends, the attribute information encoding ends and the processing returns to Fig. 11.

By performing the processing of each step in this way, the attribute information encoding unit 104 can generate the reference relation of the attribute data in the layer so that the bias in the direction of the prediction is inhibited, and can inhibit the deterioration in the encoding efficiency.

### <Flow of Hierarchization Processing>

Next, an example of a flow of hierarchization processing performed in step S111 of Fig. 12 will be described with reference to the flowchart of Fig. 13.

When the hierarchization processing starts, the control unit 121 of the hierarchization processing unit 111 sets the attribute data of all the points as a processing target in step S121 and performs each processing of steps S122 to S126 to generate the first layer (LoD).

The first layer (the layer which is generated first) becomes the bottommost layer in the hierarchized attribute data through processing of step S127 to be described below. That is, it can also be said that the control unit 121 sets the bottommost layer as the processing target LoD.

In step S122, the hierarchization processing unit 122 sets a reference point among the processing target points. The reference point is a point at which the attribute data is referred to at the time of prediction of the attribute data of a prediction point. The prediction point is a point at which the attribute data in the layer is predicted. That is, it can also be said that the hierarchization processing unit 122 sets each processing target point to either the prediction point or the reference point.

In step S123, the control unit 121 determines whether the sub-layer (Sub LoD) is generated in this layer. For example, the control unit 121 determines whether this layer is sub-hierarchized based on any information regarding setting or the like of a user or an application. When it is determined that the sub-hierarchization is performed, the processing proceeds to step S124.

In step S124, the Sub LoD generation unit 123 generates the sub-layers in the processing target layer using the geometry data. That is, the Sub LoD generation unit 123 generates the reference relation of the attribute data in the layer (LoD) as in "Method 1" of the topmost stage of the table illustrated in Fig. 3 described above in <1. Generation of Sub LoD>.

Any generation method can be used. For example, the Sub LoD generation unit 123 may apply "Method 1-1" of the second stage from the top of the table illustrated in Fig. 3 may apply "Method 1-1-1" of the third stage from the top of the table, or may apply "Method 1-1-2" of the fourth stage from the top of the table. Of course, the Sub LoD generation unit 123 may apply any of other methods.

When the sub-layers are generated, the processing proceeds to step S125.

When it is determined in step S123 that the sub-hierarchization is not performed on the processing target layer, the processing of step S124 is skipped and the processing proceeds to step S125.

In step S125, the control unit 121 sets the attribute data of the reference point selected in step S122 as a processing target and performs each processing of steps S122 to S126 to generate a subsequent layer (LoD).

The subsequent layer which is a new processing target is an immediately upper layer of the previous processing target layer in the hierarchized attribute data through the processing of step S127 to be described below. That is, it can also be said that the control unit 121 updates the processing target LoD to the immediately upper layer.

In step S126, the control unit 121 determines whether all the points are processed. The above-described processing is repeated to set all the points as the prediction point (the prediction is not performed at the final point in some cases). That is, the control unit 121 determines whether all the layers are generated. When it is determined that there is the point which has not been selected as the prediction point and the hierarchization is not completed, the processing returns to step S122.

That is, each processing of steps S122 to S126 is performed on the subsequent layer considered to be the new processing target in step S125. That is, the point set as the previous reference point is set to either the prediction point or the reference point. In this way, each processing of step S122 to S126 is recursively repeated on the point set as the reference point to generate each layer and each sub-layer and generate the reference relations between the layers and between the sub-layers.

When each processing of steps S122 to S126 is repeatedly performed to generate all the layers (and all the sub-layers) and it is determined in step S126 that all the points are processed, the processing proceeds to step S127.

In step S127, the reversing unit 124 reverses the layer of the generated attribute data and attaches a layer number to each layer in the direction opposite to the generation order.

In step S128, the weighting unit 125 derives the weighted value of the attribute data of each point. At this time, the weighting unit 125 derives the weighted value in which the reference relation between the sub-layers is reflected.

The weighting unit 125 predicts the attribute data of each point using the derived weighted value and the reference relation of the attribute data and derives a difference value between the attribute data and the prediction value.

In step S129, the control unit 121 generates the control information regarding the sub-hierarchization of the attribute data and transmits the control information to the decoding side.

When the processing of step S129 ends, the hierarchization processing ends and the processing returns to Fig. 12.

By performing the processing of each step in this way, the hierarchization processing unit 111 can generate the reference relation of the attribute data in the layer so that the bias in the direction of the prediction is inhibited. Accordingly, the encoding device 100 can inhibit the deterioration in the encoding efficiency.

### <3. Second Embodiment>

### <Decoding Device>

Next, another example of the device to which the present technology described above in <1. Generation of Sub LoD> is applied will be described. Fig. 14 is a block diagram illustrating an example of a configuration of a decoding device which is a kind of information processing device to which the present technology is applied. A decoding device 200 illustrated in Fig. 14 is a device that decodes the encoded data of the point cloud (3D data). The decoding device 200 decodes the encoded data of the point cloud by applying the present technology described above in <1. Generation of Sub LoD>.

In Fig. 14, main processing units, flows of data, and the like are mainly illustrated, and the present disclosure is not limited to these illustrated in Fig. 14. That is, in the decoding device 200, processing units which are not illustrated in as blocks in Fig. 14 may be included in Fig. 14, or processing or flows of data which are not indicated by arrows or the like may be included.

As illustrated in Fig. 14, the decoding device 200 includes a decoding target LoD depth setting unit 201, an encoded data extraction unit 202, a positional information decoding unit 203, an attribute information decoding unit 204, and a point cloud generation unit 205.

The decoding target LoD depth setting unit 201 performs processing related to setting of a depth of a decoding target layer (LoD). For example, the decoding target LoD depth setting unit 201 sets a layer to which the decoding is performed with regard to the encoded data of the point cloud maintained in the encoded data extraction unit 202. Any method of setting depth of a decoding target layer can be used.

For example, the decoding target LoD depth setting unit 201 may set the depth based on an instruction related to the depth of the layer from the outside such as a user or an application. The decoding target LoD depth setting unit 201 may obtain and set the depth of the decoding target layer based on any information such as an output image.

For example, the decoding target LoD depth setting unit 201 may set the depth of the decoding target layer based on a motion (moving, panning, tilting, and zooming) of a viewpoint, a viewpoint position, an angle of field, and a direction of a 2-dimensional image generated from the point cloud.

Any data unit for the setting of the depth of the decoding target layer can be used. For example, the decoding target LoD depth setting unit 201 can set the depth of the layer in the entire point cloud, can set the depth of the layer for each object, or can set the depth of the layer for each partial area in the object. Of course, the depth of the layer can be set in a data unit other than this example.

The encoded data extraction unit 202 acquires and retains a bit stream input to the decoding device 200. The encoded data extraction unit 202 extracts the encoded data of the geometry data (the positional information) and the attribute data (the attribute information) from the topmost layer to the layer designated by the decoding target LoD depth setting unit 201 from the retained bit stream. The encoded data extraction unit 202 supplies the extracted encoded data of the geometry data to the positional information decoding unit 203. The encoded data extraction unit 202 supplies the extracted encoded data of the attribute data to the attribute information decoding unit 204.

The positional information decoding unit 203 acquires the encoded data of the geometry data supplied from the encoded data extraction unit 202. The positional information decoding unit 203 decodes the encoded data of the geometry data to generate the geometry data (the decoding result). Any decoding method can be used as long as the decoding method is a method similar to the case of the positional information decoding unit 102 of the encoding device 100. The positional information decoding unit 203 supplies the generated geometry data (the decoding result) to the attribute information decoding unit 204 and the point cloud generation unit 205.

The attribute information decoding unit 204 acquires the encoded data of the attribute data supplied from the encoded data extraction unit 202. The attribute information decoding unit 204 acquires the geometry data (the decoding result) supplied from the positional information decoding unit 203. The attribute information decoding unit 204 decodes the encoded data of the attribute data to generate the attribute data (the decoding result) using the positional information (the decoding result) in accordance with the method to which the present technology described above in <1. Generation of Sub LoD> is applied. The attribute information decoding unit 204 supplies the generated attribute data (the decoding result) to the point cloud generation unit 205.

The point cloud generation unit 205 acquires the geometry data (the decoding result) supplied from the positional information decoding unit 203. The point cloud generation unit 205 acquires the attribute data (the decoding result) supplied from the attribute information decoding unit 204. The point cloud generation unit 205 generates the point cloud (the decoding result) using the geometry data (the decoding result) and the attribute data (the decoding result). The point cloud generation unit 205 outputs the data of the generated point cloud (the decoding result) to the outside of the decoding device 200.

In such a configuration, the decoding device 200 can perform inverse hierarchization applying a plurality of hierarchization schemes. Therefore, it is possible to inversely hierarchize the hierarchized attribute data correctly by applying the plurality of hierarchization schemes. That is, it is possible to correctly decode the encoded data encoded by applying the plurality of hierarchization scheme. Thus, it is possible to inhibit the deterioration in the encoding efficiency.

These processing units (the decoding target LoD depth setting unit 201 to the point cloud generation unit 205) have any configuration. For example, each processing unit may be configured by a logical circuit that realizes the above-described processing. Each processing unit may include, for example, a CPU, a ROM, and a RAM and realize the above-described processing by executing a program using them. Of course, each processing unit may have both the configurations, and some of the above-described processing may be realized by a logical circuit and the other processing may be realized by executing a program. The configuration of each processing unit may be independent each other. For example, some of the processing units may realize some of the above-described processing by a logical circuit and the other processing units may realize the above-described processing by executing a program. Further, the other processing units may execute the above-described processing using both the logical circuit and the program.

### <Attribute Information Decoding Unit>

Fig. 15 is a block diagram illustrating an exemplary main configuration of the attribute information decoding unit 204 (Fig. 14). In Fig. 15, main processing units, flows of data, and the like are mainly illustrated, and the present disclosure is not limited to these illustrated in Fig. 15. That is, in the attribute information decoding unit 204, processing units which are not illustrated in as blocks in Fig. 15 may be included, or processing or flows of data which are not indicated in Fig. 15 by arrows or the like may be included.

As illustrated in Fig. 15, the attribute information decoding unit 204 includes a decoding unit 211, an inverse quantization unit 212, and an inverse hierarchization processing unit 213.

The decoding unit 211 performs processing related to decoding of the encoded data of the attribute data. For example, the decoding unit 211 acquires the encoded data of the attribute data supplied to the attribute information decoding unit 204.

The decoding unit 211 decodes the encoded data of the attribute data to generate the attribute data (the decoding result). Any decoding method can be used as long as the decoding method is a method corresponding to the encoding method by the encoding unit 113 (Fig. 9) of the encoding device 100. The generated attribute data (the decoding result) corresponds to the attribute data before the encoding. As described in the first embodiment, the generated attribute data is a difference value between the attribute data and the prediction value and is quantized. The decoding unit 211 supplies the generated attribute data (the decoding result) to the inverse quantization unit 212.

When the encoded data of the attribute data includes the control information regarding the weighted value and the control information regarding the hierarchization of the attribute data, the decoding unit 211 supplies the control information to the inverse quantization unit 212.

The inverse quantization unit 212 performs processing related to the inverse quantization of the attribute data. For example, the inverse quantization unit 212 acquires the attribute data (the decoding result) supplied from the decoding unit 211. When the control information is supplied from the decoding unit 211, the inverse quantization unit 212 also acquires the control information.

The inverse quantization unit 212 inversely quantizes the attribute data (the decoding result). The inverse quantization unit 212 performs the inverse quantization in accordance with a method corresponding to the quantization by the quantization unit 112 (Fig. 9) of the encoding device 100. The inverse quantization unit 212 supplies the inversely quantized attribute data to the inverse hierarchization processing unit 213. When the control information is acquired from the decoding unit 211, the inverse quantization unit 212 also supplies the control information to the inverse hierarchization processing unit 213.

The inverse hierarchization processing unit 213 acquires the inversely quantized attribute data supplied from the inverse quantization unit 212. As described above, the attribute data is the difference value. The inverse hierarchization processing unit 213 acquires the geometry data (the decoding result) supplied from the positional information decoding unit 203. The inverse hierarchization processing unit 213 performs inverse hierarchization on the acquired attribute data (the difference value) using the geometry data. The inverse hierarchization is inverse processing of the hierarchization by the hierarchization processing unit 111 (Fig. 9) of the encoding device 100.

At this time, the inverse hierarchization processing unit 213 performs the inverse hierarchization by applying the present technology described above in <1. Generation of Sub LoD>. For example, the inverse hierarchization processing unit 213 generates the sub-layers (Sub LoD) in the layer of the attribute data, generates the reference relation of the attribute data between the sub-layers, performs prediction of the attribute data using the reference relation, and performs the inverse hierarchization. The inverse hierarchization processing unit 213 supplies the inversely hierarchized attribute data as the decoding result to the point cloud generation unit 205 (Fig. 14).

By performing the inverse hierarchization in this way, the attribute information decoding unit 204 can inversely hierarchize the attribute data hierarchized and sub-hierarchized by applying the above-described "Method 1" correctly. Accordingly, the attribute information decoding unit 204 can inhibit the deterioration in the encoding efficiency.

These processing units (the decoding unit 211 to the inverse hierarchization processing unit 213) have any configuration. For example, each processing unit may be configured by a logical circuit that realizes the above-described processing. Each processing unit may include, for example, a CPU, a ROM, and a RAM and realize the above-described processing by executing a program using them. Of course, each processing unit may have both the configurations, and some of the above-described processing may be realized by a logical circuit and the other processing may be realized by executing a program. The configuration of each processing unit may be independent each other. For example, some of the processing units may realize some of the above-described processing by a logical circuit and the other processing units may realize the above-described processing by executing a program. Further, the other processing units may execute the above-described processing using both the logical circuit and the program.

### <Inverse Hierarchization Processing unit>

Fig. 16 is a block diagram illustrating an exemplary main configuration of the inverse hierarchization processing unit 213 (Fig. 15). In Fig. 16, main processing units, flows of data, and the like are mainly illustrated, and the present disclosure is not limited to these illustrated in Fig. 16. That is, in the inverse hierarchization processing unit 213, processing units which are not illustrated in as blocks in Fig. 16 may be included, or processing or flows of data which are not indicated in Fig. 16 by arrows or the like may be included.

As illustrated in Fig. 16, the inverse hierarchization processing unit 213 includes a control unit 221, a hierarchization processing unit 222, a Sub LoD generation unit 223, a reversing unit 224, and an inverse hierarchization processing unit 225.

The control unit 221 performs processing related to control of the hierarchization. For example, the control unit 221 acquires the inversely quantized attribute data supplied from the inverse quantization unit 212 (Fig. 15). The control unit 221 acquires the geometry data (the decoding result) supplied from the positional information decoding unit 203. The control unit 221 supplies the acquired attribute data or geometry data to the hierarchization processing unit 222. Further, when the control information is supplied from the inverse quantization unit 212, the control unit 221 also acquires the control information and supplies the control information to the hierarchization processing unit 222.

The control unit 221 controls the hierarchization processing unit 222 or the Sub LoD generation unit 223, hierarchizes or sub-hierarchizes the attribute data, and generates the layer generated at the time of the encoding or the layer or the sub-layers of the structure similar to the sub-layer. For example, the control unit 221 performs the hierarchization and the sub-hierarchization by applying the present technology described in <1. Generation of Sub LoD>. For example, the control unit 221 performs the sub-hierarchization on a desired layer. That is, the control unit 221 can perform the sub-hierarchization on some of the layers or performs the sub-hierarchization on all the layers.

For example, the control unit 221 may perform the sub-hierarchization based on the control information related to the sub-hierarchization of the attribute data as in "Method 2-2" of the tenth stage from the top of the table illustrated in Fig. 3.

For example, the control unit 221 may perform the sub-hierarchization of the attribute data based on the control information (for example, sub_lod_enable_flag) indicating whether the sub-hierarchization of the attribute data is permitted.

The control unit 221 may perform the sub-hierarchization (sampling) of the attribute data based on the control information (for example, sub_lod_distance) indicating the interval of the sampling of the attribute data.

Further, the control unit 221 may perform the sub-hierarchization (sampling) of the attribute data based on the control information (for example, sub_lod_mode) indicating the method of sampling the attribute data.

By using the control information transmitted from the encoding side, the control unit 221 can perform sub-hierarchization similar to that of the encoding side more easily.

The hierarchization processing unit 222 can perform processing related to the hierarchization of the attribute data. For example, the hierarchization processing unit 222 acquires the attribute data or the geometry data (the decoding result) supplied from the control unit 221.

The hierarchization processing unit 222 hierarchizes the acquired attribute data using the acquired geometry data under the control of the control unit 221. The hierarchization scheme may be a scheme similar to the hierarchization of the hierarchization processing unit 122. That is, the hierarchization processing unit 222 hierarchizes the attribute data to a structure similar to the structure generated by the hierarchization processing unit 122. In other words, the hierarchical structure of the attribute data generated by the hierarchization processing unit 122 is reproduced. The hierarchization processing unit 222 supplies the hierarchized attribute data or geometry data to the Sub LoD generation unit 223.

The Sub LoD generation unit 223 performs processing related to the sub-hierarchization. For example, the Sub LoD generation unit 223 acquires the hierarchized attribute data or geometry data supplied from the hierarchization processing unit 222.

The Sub LoD generation unit 223 generates the sub-layers (Sub LoD) in the layer of the attribute data under the control of the control unit 221. The Sub LoD generation unit 223 performs the sub-hierarchization using the geometry data.

That is, the Sub LoD generation unit 223 generates the sub-layers (Sub LoD) of the attribute data in the layer (LoD) as in "Method 2-1" of the ninth stage from the top of the table illustrated in Fig. 3 and described above in <1. Generation of Sub LoD> and generates the reference relation between the sub-layers.

In this way, the Sub LoD generation unit 223 can generate the reference relation of the attribute data in the layer so that the bias in the direction of the prediction is inhibited, and it is possible to inhibit the deterioration in the encoding efficiency.

The Sub LoD generation unit 223 performs the sub-hierarchization in accordance with a scheme similar to the sub-hierarchization by the Sub LoD generation unit 123. That is, the Sub LoD generation unit 223 generates the sub-layers of the structure similar to the structure generated by the Sub LoD generation unit 123. In other words, the structure of the sub-layer of the attribute data generated by the Sub LoD generation unit 123 is reproduced.

For example, the Sub LoD generation unit 223 may recursively repeat processing in which some of the attribute data of each point in the layer are sampled (selected) and sub-hierarchized as in "Method 1-1" in the second stage from the top of the table illustrated in Fig. 3.

The Sub LoD generation unit 223 may generate the sub-layers by aligning the attribute data of a processing target layer in the Morton order and sampling some of the attribute data at equal intervals as described in "Method 1-1-1" in the third stage from the top of the table illustrated in Fig. 3.

The Sub LoD generation unit 223 may generate the sub-layers by aligning the attribute data of a processing target layer in the Morton order and sampling some of the attribute data at an unequal interval as described in "Method 1-1-2" in the fourth stage from the top of the table illustrated in Fig. 3.

Of course, any of other methods may be used. When the control unit 221 does not permit the sub-hierarchization, the Sub LoD generation unit 223 can omit the sub-hierarchization. That is, the Sub LoD generation unit 223 can perform the sub-hierarchization on only the layer permitted by the control unit 221.

The Sub LoD generation unit 223 supplies the sub-hierarchized attribute data to the reversing unit 224 under the control of the control unit 221 in this way.

The reversing unit 224 performs processing related to reversing of the layer. For example, the reversing unit 224 acquires the attribute data supplied from the Sub LoD generation unit 223.

The reversing unit 224 reverse the layer of the attribute data as in the case of the reversing unit 124. For example, the reversing unit 224 attaches a layer number in an opposite order to the generation order to each layer of the attribute data (numbers for identifying layers of which a value is added by 1 whenever the layer is lowered by one layer from the topmost layer 0 and with which a layer in which the bottommost layer has the maximum number).

The reversing unit 224 supplies the attribute data in which the layer is reversed to the inverse hierarchization processing unit 225.

The inverse hierarchization processing unit 225 performs processing related to the inverse hierarchization. For example, the inverse hierarchization processing unit 225 acquires the attribute data supplied from the reversing unit 224. The attribute data has a structure of a layer structure configured by the difference value between the attribute data and the prediction value and generated (reproduced) by the hierarchization processing unit 222 and a structure of the sub-layers generated (reproduced) by the Sub LoD generation unit 223. The inverse hierarchization processing unit 225 inversely hierarchizes the acquired attribute data to generate (restore) the attribute data of each point.

That is, the inverse hierarchization processing unit 225 performs prediction of the attribute data of each point and derives (restores) the attribute data of each point from the difference value using the derived prediction value. At this time, the inverse hierarchization processing unit 225 performs prediction of the attribute data (derives the prediction value of the attribute data) using the reference relation between the layers or the sub-layers reproduced as described above as in "Method 2" of the eighth stage from the top of the table illustrated in Fig. 3.

For example, the inverse hierarchization processing unit 225 derives the prediction value of the attribute data of each point for each layer in order from the topmost layer to the bottommost layer (for each sub-layer in order from the topmost sub-layer to the bottommost sub-layer in the layer).

Then, the inverse hierarchization processing unit 225 derives the attribute data of the point by adding the derived prediction value to the difference value corresponding to the point. In this way, the inverse hierarchization processing unit 225 generates (restores) the attribute data of each point.

The inverse hierarchization processing unit 225 supplies the attribute data (the decoding result) generated (restored) through the foregoing inverse hierarchization to the point cloud generation unit 205 (Fig. 14).

By performing the inverse hierarchization in this way, the inverse hierarchization processing unit 225 can inversely hierarchize the attribute data hierarchized and sub-hierarchized by applying the above-described "Method 1" or the like correctly. Accordingly, the decoding device 200 can inhibit the deterioration in the encoding efficiency.

These processing units (the control unit 221 to the inverse hierarchization processing unit 225) have any configuration. For example, each processing unit may be configured by a logical circuit that realizes the above-described processing. Each processing unit may include, for example, a CPU, a ROM, and a RAM and realize the above-described processing by executing a program using them. Of course, each processing unit may have both the configurations, and some of the above-described processing may be realized by a logical circuit and the processing may be realized by executing a program. The configuration of each processing unit may be independent each other. For example, some of the processing units may realize some of the above-described processing by a logical circuit and the other processing units may realize the above-described processing by executing a program. Further, the other processing units may execute the above-described processing using both the logical circuit and the program.

### <Flow of Decoding>

Next, processing performed by the decoding device 200 will be described. The decoding device 200 decodes the encoded data of the point cloud by performing the decoding. An example of the flow of the decoding will be described with reference to the flowchart of Fig. 17.

When the decoding starts, the decoding target LoD depth setting unit 201 of the decoding device 200 sets an LoD depth to be decoded (that is, a range of a decoding target layer) in step S201.

In step S202, the encoded data extraction unit 202 acquires and retains a bit stream and extracts the encoded data of the geometry data (the positional information) and the attribute data (the attribute information) from the topmost layer to the layer of the LoD depth set in step S201. The layers of the extracted geometry data may match or may not match the layers (the number of layers) of the attribute data.

In step S203, the positional information decoding unit 203 decodes the encoded data of the geometry data extracted in step S202 to generate the geometry data (the decoding result).

In step S204, the attribute information decoding unit 204 decodes the encoded data of the attribute data extracted in step S202 to generate the attribute data (the decoding result). At this time, the attribute information decoding unit 204 performs the processing by applying the present technology described above in

### <1. Generation of Sub LoD>. The details of the attribute information decoding will be described below.

In step S205, the point cloud generation unit 205 generates and outputs point cloud data (a decoding result) using the geometry data (the decoding result) generated in step S203 and the attribute data (the decoding result) generated in step S204.

When the processing of step S205 ends, the decoding ends.

By performing the processing of each step in this way, the decoding device 200 inversely hierarchizes the attribute data hierarchized and sub-hierarchized by applying the above-described "Method 1" or the like correctly. Accordingly, the decoding device 200 can inhibit the deterioration in the encoding efficiency.

### <Flow of Attribute Information Decoding>

Next, an example of a flow of attribute information decoding performed in step S204 of Fig. 17 will be described with reference to the flowchart of Fig. 18.

When the attribute information decoding starts, the decoding unit 211 of the attribute information decoding unit 204 decodes the encoded data of the attribute data to generate the attribute data (the decoding result) in step S211. The attribute data (the decoding result) is quantized, as described above.

In step S212, the inverse quantization unit 212 inversely quantizes the attribute data (the decoding result) generated in step S211 by performing the inverse quantizing. The inversely quantized attribute data is a difference value.

In step S213, the inverse hierarchization processing unit 213 inversely hierarchizes the attribute data inversely quantized in step S212 and derives the attribute data of each point by performing the inverse hierarchization processing. At this time, the inverse hierarchization processing unit 213 performs the inverse hierarchizing by applying the technology described above in <1. Generation of Sub LoD>. The details of the inverse hierarchization processing will be described below.

When the processing of step S213 ends, the attribute information decoding ends and the processing returns to Fig. 17.

By performing the processing of each step in this way, the attribute information decoding unit 204 can inversely hierarchize the attribute data hierarchized and sub-hierarchized by applying the above-described "Method 1" or the like correctly. Accordingly, the decoding device 200 can inhibit the deterioration in the encoding efficiency.

### <Flow of Inverse Hierarchization Processing>

Next, an example of a flow of inverse hierarchization processing performed in step S213 of Fig. 18 will be described with reference to the flowchart of Fig. 19.

When the inverse hierarchization processing starts, the control unit 221 of the inverse hierarchization processing unit 213 sets the attribute data (the difference values) of all the points as the processing target and performs each processing of steps S222 to S226 to generate the first layer (LoD) as in the case of step S121 (Fig. 13) in step S221.

The first layer (the layer which is generated first) becomes the bottommost layer in the hierarchized attribute data through processing of step S227 to be described below. That is, it can also be said that the control unit 221 sets the bottommost layer as the processing target LoD.

In step S222, the hierarchization processing unit 222 sets a reference point among the processing target points as in the case of step S122 (Fig. 13). That is, it can also be said that the hierarchization processing unit 222 sets each processing target point to either the prediction point or the reference point.

In step S223, the control unit 221 determines whether the sub-layer (Sub LoD) is generated in this layer as in the case of step S123 (Fig. 13). The control unit 221 can perform this determination based on any information or the like. For example, the control unit 221 determines whether this layer is sub-hierarchized based on the control information transmitted from the encoding side. When it is determined that the sub-hierarchization is performed, the processing proceeds to step S224.

In step S224, the Sub LoD generation unit 223 generates the sub-layers in the processing target layer using the geometry data as in the case of step S124 (Fig. 13). That is, the Sub LoD generation unit 223 generates the sub-layers (Sub LoD) of the attribute data in the layer (LoD) and generates the reference relation between the sub-layers as in "Method 2-1" of the ninth stage from the top of the table illustrated in Fig. 3 described above in <1. Generation of Sub LoD>.

That is, in step S224, the Sub LoD generation unit 223 performs the sub-hierarchization in accordance with a scheme similar to the sub-hierarchization performed in step S124. That is, the Sub LoD generation unit 223 generates the sub-layers with a structure similar to the structure generated in step S124. In other words, the structure of the sub-layers of the attribute data generated in step S124 is reproduced.

For example, the Sub LoD generation unit 223 may apply "Method 1-1" of the second stage from the top of the table illustrated in Fig. 3, may apply "Method 1-1-1" of the third stage from the top of the table, or may apply "Method 1-1-2" of the fourth stage from the top of the table. Of course, the Sub LoD generation unit 223 may apply any of other methods.

When the sub-layers are generated, the processing proceeds to step S225.

When it is determined in step S223 that the sub-hierarchization is not performed on the processing target layer, the processing of step S224 is skipped and the processing proceeds to step S225.

In step S225, the control unit 221 sets the attribute data of the reference point selected in step S222 as a processing target and performs each processing of steps S222 to S226 to generate a subsequent layer (LoD) as in the case of step S125 (Fig. 13).

The subsequent layer which is a new processing target is an immediately upper layer of the previous processing target in the hierarchized attribute data through the processing of step S227 to be described below. That is, it can also be said that the control unit 221 updates the processing target LoD to the immediately upper layer.

In step S226, the control unit 221 determines whether all the points are processed as in the case of step S126 (Fig. 13). The above-described processing is repeated to set all the points as the prediction point (the prediction is not performed at the final point in some cases). That is, the control unit 221 determines whether all the layers are generated. When it is determined that there is the point which has not been selected as the prediction point and the hierarchization is not completed, the processing returns to step S222.

That is, each processing of steps S222 to S226 is performed on the subsequent layer considered to be the new processing target in step S225. That is, the point set as the previous reference point is set to either the prediction point or the reference point. In this way, each processing of step S222 to S226 is recursively repeated on the point set as the reference point to generate each layer and each sub-layer and generate (reproduce) the reference relations between the layers and between the sub-layers.

When each processing of steps S222 to S226 is repeatedly performed to generate (reproduce) all the layers (and all the sub-layers) and it is determined in step S226 that all the points are processed, the processing proceeds to step S227.

In step S227, the reversing unit 224 reverses the layer of the generated attribute data and attaches a layer number in the direction opposite to the generation order to each layer as in the case of step S127 (Fig. 13). Thus, the attribute data that has the hierarchical structure configured by the difference value between the attribute data and the prediction value and generated (reproduced) in step S222 and a structure of the sub-layers generated (reproduced) in step S224 is generated (reproduced).

In step S228, the inverse hierarchization processing unit 225 inversely hierarchizes the generated attribute data and generates (restores) the attribute data of each point.

That is, the inverse hierarchization processing unit 225 performs prediction of the attribute data of each point and derives (restores) the attribute data of each point from the difference value using the derived prediction value. At this time, the inverse hierarchization processing unit 225 performs prediction of the attribute data (derives the prediction value of the attribute data) using the reference relation between the layers or the sub-layers reproduced as described above as in "Method 2" of the eighth stage from the top of the table illustrated in Fig. 3.

For example, the inverse hierarchization processing unit 225 derives the prediction value of the attribute data of each point for each layer in order from the topmost layer to the bottommost layer (for each sub-layer in order from the topmost sub-layer to the bottommost sub-layer in the layer).

Then, the inverse hierarchization processing unit 225 derives the attribute data of the point by adding the derived prediction value to the difference value corresponding to the point. In this way, the inverse hierarchization processing unit 225 generates (restores) the attribute data of each point.

When the attribute data of all the points are generated (restored) and the inverse hierarchization is completed, the inverse hierarchization processing ends and the processing returns to Fig. 18.

By performing the processing of each step in this way, the inverse hierarchization processing unit 213 can inversely hierarchize the attribute data hierarchized and sub-hierarchized by applying the above-described "Method 1" or the like correctly. Accordingly, the decoding device 200 can inhibit the deterioration in the encoding efficiency.

### <4. Supplements>

### <Hierarchization and Inverse Hierarchization Methods>

The lifting has been described above as the example of the hierarchization and inverse hierarchization methods for the attribute information, but the present technology can be applied to any technology for hierarchizing the attribute information. That is, the hierarchization and inverse hierarchization methods for the attribute information may be a method other than the lifting.

### <Computer>

The above-described series of processing can be performed by hardware or software. When the series of processing is performed by software, a program including the software is installed in a computer. Here, the computer includes a computer which is embedded in dedicated hardware or, for example, a general-purpose personal computer capable of executing various functions by installing various programs.

Fig. 20 is a block diagram illustrating an exemplary hardware configuration of a computer that performs the above-described series of processing in accordance with a program.

In a computer 900 illustrated in Fig. 20, a central processing unit (CPU) 901, a read-only memory (ROM) 902, and a random access memory (RAM) 903 are connected to each other via a bus 904.

An input/output interface 910 is also connected to the bus 904. An input unit 911, an output unit 912, a storage unit 913, a communication unit 914, and a drive 915 are connected to the input/output interface 910.

The input unit 911 is, for example, a keyboard, a mouse, a microphone, a touch panel, or an input terminal. The output unit 912 is, for example, a display, a speaker, or an output terminal. The storage unit 913 is, for example, a hard disk, a RAM disc, or a nonvolatile memory. The communication unit 914 is, for example, a network interface. The drive 915 drives a removable medium 921 such as a magnetic disk, an optical disc, a magneto-optical disc, or a semiconductor memory.

In the computer that has the foregoing configuration, the CPU 901 performs the above-described series of processing, for example, by loading a program stored in the storage unit 913 on the RAM 903 via the input/output interface 910 and the bus 904 and executing the program. In the RAM 903, data or the like necessary for the CPU 901 to perform various kinds of processing is also appropriately stored.

For example, a program which is executed by the computer can be recorded on the removable medium 921 serving as a package medium for application. In this case, the program can be installed to the storage unit 913 via the input/output interface 910 by mounting the removable medium 921 in the drive 915.

The program can also be provided via a wired or wireless transmission medium such as a local area network, the Internet, or digital satellite broadcasting. In this case, the program can be received by the communication unit 914 and installed in the storage unit 913.

In addition, the program can be installed in advance in the ROM 902 or the storage unit 913.

### <Application Target of Present Technology>

The cases in which the present technology is applied to the encoding and the decoding of the point cloud data has been described above. However, the present technology is not limited to the cases and can be applied to encoding and decoding of 3D data of any standard. That is, any of various kinds of processing such as encoding and decoding schemes and any of specifications of various kinds of data such as 3D data or metadata can be used as long as the processing and specifications are incompatible with the above-described present technology. Some of the above-described processing or specifications may be omitted as long as the processing and specifications are inconsistent with the present technology.

The encoding device 100 and the decoding device 200 have been described above as the application examples of the present technology, but the present technology can be applied to any configuration.

For example, the present technology can be applied to various electronic devices such as a transmitter or a receiver (for example, a television receiver or a mobile phone) in wired broadcasting of a satellite broadcasting, a cable TV, or the like, transmission on the Internet, or delivery to a terminal through cellular communication, or a device (for example, a hard disk recorder or a camera) recording an image on a medium such as an optical disc, a magnetic disk, and a flash memory or reproducing an image from the storage medium.

For example, the present technology can be implemented as a configuration of a part of a device such as a processor (for example, a video processor) of a system large scale integration (LSI), a module (for example, a video module) using a plurality of processors or the like, a unit (for example, a video unit) using a plurality of modules or the like, or a set (for example, a video set) with other functions added to the unit.

For example, the present technology can also be applied to a network system configured by a plurality of devices. For example, the present technology may be implemented as cloud computing shared or processed in cooperation with a plurality of devices via a network. For example, the present technology can be implemented in a cloud service providing a service related to images (moving images) to any terminal such as a computer, an audio visual (AV) device, a portable information processing terminal, or an Internet of things (IoT) device.

In the present specification, the system is a set of a plurality of constituent elements (devices, modules (components), or the like) and all the constituent elements may not be in the same casing. Accordingly, a plurality of devices accommodated in separate casings and connected via a network and a single device accommodating a plurality of modules in a single casing are all a system.

### <Fields and Purposes to Which Present Technology Can Be Applied>

A system, device, a processing unit, and the like to which the present technology is applied can be used in any field such as traffic, medical treatment, security, agriculture, livestock industries, a mining industry, beauty, factories, home appliance, weather, and natural surveillance, for example. Any purpose can be set.

### <Others>

In the present specification, the "flag" is information for identifying a plurality of states and includes not only information used to identify two states of true (1) and false (0) but also information for identifying three or more states. Accordingly, a value of the "flag" may be a binary value of 1/0 or may be, for example, a ternary value or the like. That is, any number of bits in the "flag" can be used and may be 1 bit or a plurality of bits. For identification information (also including the flag), it is assumed that the identification information is included in a bit stream and differential information of the identification information with respect to information serving as a certain standard is included in a bit steam. Therefore, in the present specification, the "flag" or the "identification information" includes not only the information but also differential information with respect to information serving as a standard.

Various kinds of information (metadata or the like) regarding encode data (a bit stream) may be transmitted or recorded in any form as long as the information is associated with the encoded data. Here, the term "associating" means that, for example, when one piece of data is processed, the other piece of data can be used (can be linked). That is, the associated data may be collected as one piece of data or may be separate data. For example, information associated with encoded data (an image) may be transmitted on a transmission path different from that of the encoded data (the image). For example, information associated with encoded data (an image) may be recorded on a recording medium different from that of the encoded data (the image) (or a separate recording area of the same recoding medium). The "associating" may not be entire data but may be part of the data. For example, an image and information corresponding to the image may be associated with a plurality of frames, one frame, or any unit such as a part in the frame.

In the present specification, a term such as "combining," "multiplexing," "adding," "integrating," "including," "storing," "pushing," "entering," or "inserting" means that a plurality of things is collected as one, for example, encoded data and meta data are collected as one piece of data and means one method of the above-described "associating."

Embodiments of the present technology are not limited to the above-described embodiments and can be changed variously within the scope of the present technology without departing from the gist of the present technology.

For example, the configuration described as one device (or processing unit) may be divided and configured as a plurality of devices (or processing units). In contrast, the configuration described as the plurality of devices (or processing units) may be collected and configured as one device (or processing unit). A configuration other than the above-described configuration may be added to the configuration of each device (or each processing unit). Further, when the configuration or the operation are substantially the same in the entire system, a part of the configuration of a certain device (or processing unit) may be included in the configuration of another device (or another processing unit).

For example, the above-described program may be executed in any device. In this case, the device may have a necessary function (a functional block or the like) and may be able to obtain necessary information.

For example, each step of one flowchart may be executed by one device or may be shared and executed by a plurality of devices. Further, when a plurality of kinds of processing are included in one step, the plurality of kinds of processing may be performed by one device or may be shared and performed by a plurality of devices. In other words, a plurality of kinds of processing included in one step can also be executed as processing of a plurality of steps. In contrast, processing described as a plurality of steps can be collectively performed as one step.

For example, for a program executed by a computer, processing of steps describing the program may be performed chronologically in order described in the present specification or may be performed in parallel or individually at a necessary timing such as the time of calling. That is, processing of each step may be performed in order different from the above-described order as long as inconsistency does not occur. Further, processing of steps describing the program may be performed in parallel to processing of another program or may be performed in combination with processing of another program.

For example, a plurality of technologies related to the present technology can be implemented independently alone as long as inconsistency does not occur. Of course, any plurality of technologies may be implemented together. For example, some or all of the present technologies described in several embodiments may be implemented in combination with some or all of the present technologies described in the other embodiments. Apart or all of any above-described present technology can also be implemented together with another technology which has not be undescribed above.

The present technology can also be configured as follows.
(1) An information processing device including:
   a hierarchization unit configured to hierarchize attribute information of a point cloud in which 3-dimensional shaped objects are expressed as a set of points, and generate a reference relation of the attribute information between layers; and
   a sub-hierarchization unit configured to sub-hierarchize the attribute information of a layer in the layer of the attribute information generated by the hierarchization unit to generate a reference relation of the attribute information between sub-layers.
(2) The information processing device according to (1), wherein the sub-hierarchization unit sub-hierarchizes the attribute information by aligning the attribute information of a processing target layer in a Morton order and sampling the attribute information at equal intervals.
(3) The information processing device according to (1), wherein the sub-hierarchization unit sub-hierarchizes the attribute information by aligning the attribute information of a processing target layer in a Morton order and sampling the attribute information at an unequal interval.
(4) The information processing device according to any one of (1) to (3), further including a weighting unit configured to derive a weight value of each piece of attribute information by updating the weight value of each layer in accordance with the reference relation of the attribute information between the sub-layers generated by the sub-hierarchization unit.
(5) The information processing device according to any one of (1) to (3), further including a weighting unit configured to derive a weight value of each piece of attribute information in accordance with a reference relation of the attribute information between the layers generated by the hierarchization unit and a reference relation of the attribute information between the sub-layers generated by the sub-hierarchization unit.
(6) The information processing device according to any one of (1) to (5), further comprising an encoding unit configured to encode the attribute information and generate encoded data of the attribute information.
(7) The information processing device according to (6), further comprising a generation unit configured to generate control information regarding sub-hierarchization of the attribute information,
   wherein the encoding unit generates the encoded data including the control information generated by the generation unit.
(8) The information processing device according to (7), wherein the generation unit generates control information indicating whether the sub-hierarchization of the attribute information is permitted.
(9) The information processing device according to (7) or (8), wherein the generation unit generates control information indicating an interval of sampling of the attribute information by the sub-hierarchization unit.
(10) In the information processing device according to any one of (7) to (9), wherein the generation unit generates control information indicating a method of sampling the attribute information by the sub-hierarchization unit.
(11) An information processing method including:
   hierarchizing attribute information of a point cloud in which 3-dimensional shaped objects are expressed as a set of points to generate a reference relation of the attribute information between layers; and
   sub-hierarchizing the attribute information of a layer in the layer of the generated attribute information to generate a reference relation of the attribute information between sub-layers.
(12) An information processing device including:
   a hierarchization unit configured to hierarchize attribute information of a point cloud in which 3-dimensional shaped objects are expressed as a set of points, and generate a reference relation of the attribute information between layers;
   a sub-hierarchization unit configured to sub-hierarchize the attribute information of a layer in the layer of the attribute information generated by the hierarchization unit to generate a reference relation of the attribute information between sub-layers; and
   an inverse hierarchization unit configured to inversely hierarchize the attribute information based on the reference relation of the attribute information between the layers generated by the hierarchization unit and the reference relation of the attribute information between the sub-layers generated by the sub-hierarchization unit.
(13) The information processing device according to (12), wherein the sub-hierarchization unit sub-hierarchizes the attribute information by aligning the attribute information of a processing target layer in a Morton order and sampling the attribute information in an equal interval.
(14) The information processing device according to (12), wherein the sub-hierarchization unit sub-hierarchizes the attribute information by aligning the attribute information of a processing target layer in a Morton order and sampling the attribute information at an unequal interval.
(15) The information processing device according to any one of (12) to (14), further comprising a decoding unit configured to decode encoded data of the attribute information to restore the attribute information.
(16) The information processing device according to (15),
   wherein the decoding unit decodes the encoded data to restore control information regarding the sub-hierarchization of the attribute information, and wherein the sub-hierarchization unit sub-hierarchizes the attribute information based on the control information restored by the decoding unit.
(17) The information processing device according to (16), wherein the sub-hierarchization unit sub-hierarchizes the attribute information based on control information which is restored by the decoding unit and indicates whether the sub-hierarchization of the attribute information is permitted.
(18) The information processing device according to (16) or (17), wherein the sub-hierarchization unit sub-hierarchizes the attribute information based on control information which is restored by the decoding unit and indicates an interval of sampling of the attribute information.
(19) The information processing device according to any one of (16) to (18), wherein the sub-hierarchization unit sub-hierarchizes the attribute information based on control information which is restored by the decoding unit and indicates a method of sampling the attribute information.
(20) An information processing method including:
   hierarchizing attribute information of a point cloud in which 3-dimensional shaped objects are expressed as a set of points to generate a reference relation of the attribute information between layers;
   sub-hierarchizing the attribute information of a layer in the layer of the generated attribute information to generate a reference relation of the attribute information between sub-layers; and
   inversely hierarchizing the attribute information based on the generated reference relation of the attribute information between the layers and the generated reference relation of the attribute information between the sub-layers.

### [Reference Signs List]

- 100: Encoding device
- 101: Positional information encoding unit
- 102: Positional information decoding unit
- 103: Point cloud generation unit
- 104: Attribute information encoding unit
- 105: Bit stream generation unit
- 111: Hierarchization processing unit
- 112: Quantization unit
- 113: Encoding unit
- 121: Control unit
- 122: Hierarchization processing unit
- 123: Sub LoD generation unit
- 124: Reversing unit
- 125: Weighting unit
- 200: Decoding device
- 201: Decoding target LoD depth setting unit
- 202: Encoded data extraction unit
- 203: Positional information decoding unit
- 204: Attribute information decoding unit
- 205: Point cloud generation unit
- 211: Decoding unit
- 212: Inverse quantization unit
- 213: Inverse hierarchization processing unit
- 221: Control unit
- 222: Hierarchization processing unit
- 223: Sub LoD generation unit
- 224: Reversing unit
- 225: Inverse hierarchization processing unit

## Claims

1. An information processing device comprising:
a hierarchization unit configured to hierarchize attribute information of a point cloud in which 3-dimensional shaped objects are expressed as a set of points, and generate a reference relation of the attribute information between layers; and
a sub-hierarchization unit configured to sub-hierarchize the attribute information of a layer in the layer of the attribute information generated by the hierarchization unit to generate a reference relation of the attribute information between sub-layers.

2. The information processing device according to claim 1, wherein the sub-hierarchization unit sub-hierarchizes the attribute information by aligning the attribute information of a processing target layer in a Morton order and sampling the attribute information at equal intervals.

3. The information processing device according to claim 1, wherein the sub-hierarchization unit sub-hierarchizes the attribute information by aligning the attribute information of a processing target layer in a Morton order and sampling the attribute information at an unequal interval.

4. The information processing device according to claim 1, further comprising a weighting unit configured to derive a weight value of each piece of attribute information by updating the weight value of each layer in accordance with the reference relation of the attribute information between the sub-layers generated by the sub-hierarchization unit.

5. The information processing device according to claim 1, further comprising a weighting unit configured to derive a weight value of each piece of attribute information in accordance with a reference relation of the attribute information between the layers generated by the hierarchization unit and a reference relation of the attribute information between the sub-layers generated by the sub-hierarchization unit.

6. The information processing device according to claim 1, further comprising an encoding unit configured to encode the attribute information and generate encoded data of the attribute information.

7. The information processing device according to claim 6, further comprising a generation unit configured to generate control information regarding sub-hierarchization of the attribute information,
wherein the encoding unit generates the encoded data including the control information generated by the generation unit.

8. The information processing device according to claim 7, wherein the generation unit generates control information indicating whether the sub-hierarchization of the attribute information is permitted.

9. The information processing device according to claim 7, wherein the generation unit generates control information indicating an interval of sampling of the attribute information by the sub-hierarchization unit.

10. The information processing device according to claim 7, wherein the generation unit generates control information indicating a method of sampling the attribute information by the sub-hierarchization unit.

11. An information processing method comprising:
hierarchizing attribute information of a point cloud in which 3-dimensional shaped objects are expressed as a set of points, and generate a reference relation of the attribute information between layers; and
sub-hierarchizing the attribute information of a layer in the layer of the generated attribute information to generate a reference relation of the attribute information between sub-layers.

12. An information processing device comprising:
a hierarchization unit configured to hierarchize attribute information of a point cloud in which 3-dimensional shaped objects are expressed as a set of points, and generate a reference relation of the attribute information between layers;
a sub-hierarchization unit configured to sub-hierarchize the attribute information of a layer in the layer of the attribute information generated by the hierarchization unit to generate a reference relation of the attribute information between sub-layers; and
an inverse hierarchization unit configured to inversely hierarchize the attribute information based on the reference relation of the attribute information between the layers generated by the hierarchization unit and the reference relation of the attribute information between the sub-layers generated by the sub-hierarchization unit.

13. The information processing device according to claim 12, wherein the sub-hierarchization unit sub-hierarchizes the attribute information by aligning the attribute information of a processing target layer in a Morton order and sampling the attribute information in an equal interval.

14. The information processing device according to claim 12, wherein the sub-hierarchization unit sub-hierarchizes the attribute information by aligning the attribute information of a processing target layer in a Morton order and sampling the attribute information at an unequal interval.

15. The information processing device according to claim 12, further comprising a decoding unit configured to decode encoded data of the attribute information to restore the attribute information.

16. The information processing device according to claim 15,
wherein the decoding unit decodes the encoded data to restore control information regarding the sub-hierarchization of the attribute information, and
wherein the sub-hierarchization unit sub-hierarchizes the attribute information based on the control information restored by the decoding unit.

17. The information processing device according to claim 16, wherein the sub-hierarchization unit sub-hierarchizes the attribute information based on control information which is restored by the decoding unit and indicates whether the sub-hierarchization of the attribute information is permitted.

18. The information processing device according to claim 16, wherein the sub-hierarchization unit sub-hierarchizes the attribute information based on control information which is restored by the decoding unit and indicates an interval of sampling of the attribute information.

19. The information processing device according to claim 16, wherein the sub-hierarchization unit sub-hierarchizes the attribute information based on control information which is restored by the decoding unit and indicates a method of sampling the attribute information.

20. An information processing method comprising:
hierarchizing attribute information of a point cloud in which 3-dimensional shaped objects are expressed as a set of points, and generate a reference relation of the attribute information between layers;
sub-hierarchizing the attribute information of a layer in the layer of the generated attribute information to generate a reference relation of the attribute information between sub-layers; and
inversely hierarchizing the attribute information based on the generated reference relation of the attribute information between the layers and the generated reference relation of the attribute information between the sub-layers.
